# EUROPEAN PATENT SPECIFICATION

(11) **EP 4 229 428 B1**
(45) Date of publication and mention of the grant of the patent: **11.12.2024**
(21) Application number: 21799136.3
(22) Date of filing: 22.09.2021
(51) Int. Cl.: G01S 5/00, G01S 5/02, H04W 72/21

(54) **PHASE CHARACTERISTIC CAPABILITY REPORTING FOR SOUNDING REFERENCE SIGNAL (SRS) STITCHING**
MELDUNG DER PHASENEIGENSCHAFTSFÄHIGKEIT FÜR SONDIERUNGSREFERENZSIGNAL (SRS)-STITCHING
RAPPORT DE CAPACITÉ DE CARACTÉRISTIQUES DE PHASE POUR LE RACCORDEMENT DE SIGNAUX DE RÉFÉRENCE DE SONDAGE (SRS)

(30) Priority: 16.10.2020 IN 202041045124
(43) Date of publication of application: 23.08.2023
(73) Proprietor: QUALCOMM Incorporated, San Diego, CA 92121-1714 (US)
(72) Inventor: MANOLAKOS, Alexandros, SAN DIEGO, California 92121-1714 (US); AKKARAKARAN, Sony, SAN DIEGO, California 92121-1714 (US); YERRAMALLI, Srinivas, SAN DIEGO, California 92121-1714 (US); KIM, Sanghoon, San Diego, California 92121-1714 (US); OPSHAUG, Guttorm Ringstad, SAN DIEGO, California 92121-1714 (US); SANKAR, Hari, SAN DIEGO, California 92121-1714 (US); CABRERA MERCADER, Carlos, SAN DIEGO, California 92121-1714 (US); GAAL, Peter, SAN DIEGO, California 92121-1714 (US)
(74) Representative: Reddie & Grose LLP
(86) International application number: PCT/US2021/051563
(87) International publication number: WO 2022/081319

(56) References cited:
- EP-A1- 3 700 267
- WO-A1-2020/192782
- US-A1- 2017 302 419

## Description

### BACKGROUND

### 1. Field of Invention

The present invention relates generally to the field of wireless communications, and more specifically to determining the location of a User Equipment (UE) using radio frequency (RF) signals.

### 2. Description of Related Art

In a Fifth Generation (5G) New Radio (NR) mobile communication network, a UE may transmit an uplink (UL) Sounding Reference Signal (SRS) that can be received by base stations and/or other Transmission/Reception Points (TRPs) to make angle and/or distance measurements to determine the location of the UE using any of a variety of network-based positioning methods. An increase in a bandwidth of reference signals transmitted by the UE can result in an increase in accuracy of the determined position for the UE. A network may obtain the capabilities of the UE related to bandwidth to help ensure efficient bandwidth usage.

EP 3 700 267 A1 discloses a method for signal transmission, a terminal and a network device which relate to a wireless communication field to realize efficient SRS transmission. The method including sending, by a terminal, first indication information to a network device which is used by the network device to determine the second indication information which is used to instruct the terminal to send an SRS signal; receiving, by the terminal, the second indication information sent by the network device; and sending the SRS signal by the terminal according to the second indication information.

US 2017/302419 A1 discloses a system and method for SRS switching in order to transmit SRS symbols over all component carriers,

### BRIEF SUMMARY

A mobile device can report its capabilities to a network node regarding one or more phase characteristics between Sounding Resource Signal (SRS) resources transmitted by the mobile device under one or more circumstances, enabling the network to configure the mobile device accordingly. Such reporting can enable the network to coherently process multiple SRS resources, effectively increasing the bandwidth of the SRS resources and, ultimately, the accuracy of a position determination for the mobile device. Various techniques are provided for reporting capabilities and determining applicable conditions.

The invention is defined in the independent claims. Optional features are defined in the dependent claims.

The foregoing, together with other features and examples, will be described in more detail below in the following specification, claims, and accompanying drawings.

### BRIEF DESCRIPTION OF THE DRAWINGS

FIG. 1 is a diagram of a positioning system, according to an embodiment.
FIG. 2 is a diagram of a 5G NR positioning system, according to an embodiment.
FIG. 3 is a diagram showing a frame structure for NR and associated terminology, according to an embodiment.
FIG. 4 is a diagram showing a radio frame sequence with Positioning Reference Signal (PRS) positioning occasions, according to an embodiment.
FIG. 5 is an illustration of different reference signal structures for reference signals, according to an embodiment.
FIG. 6 as a diagram of a hierarchical structure of PRS resources, as currently defined in 5GNR.
FIG. 7 is a time diagram illustrating two different options for slot usage of a resource set, according to an embodiment.
FIG. 8 is a signal flow diagram illustrating how a mobile device may communicate capabilities related to a phase characteristic between SRS resources to the network, according to an embodiment.
FIGS. 9-13 are diagrams plotting the transmission of SRS resources over frequency and time.
FIG. 14 is a flow diagram of a method of wireless communication at a mobile device, according to an embodiment.
FIG. 15 is a flow diagram of a method of wireless communication at a network node, according to an embodiment.
FIG. 16 is a block diagram of a UE, according to an embodiment.
FIG. 17 is a block diagram of a Transmission/Reception Point (TRP), according to an embodiment.
FIG. 18 is a block diagram of an embodiment of a computer system.

Like reference symbols in the various drawings indicate like elements, in accordance with certain example implementations. In addition, multiple instances of an element may be indicated by following a first number for the element with a letter or a hyphen and a second number. For example, multiple instances of an element 110 may be indicated as 110-1, 110-2, 110-3 etc. or as 110a, 110b, 110c, etc. When referring to such an element using only the first number, any instance of the element is to be understood (e.g., element 110 in the previous example would refer to elements 110-1, 110-2, and 110-3 or to elements 110a, 110b, and 110c).

### DETAILED DESCRIPTION

Several illustrative embodiments will now be described with respect to the accompanying drawings, which form a part hereof. While some embodiments in which one or more aspects of the disclosure may be implemented as described below, other embodiments may be used, and various modifications may be made.

The following description is directed to certain implementations for the purposes of describing innovative aspects of various embodiments. However, a person having ordinary skill in the art will readily recognize that the teachings herein can be applied in a multitude of different ways. The described implementations may be implemented in any device, system, or network that is capable of transmitting and receiving radio frequency (RF) signals according to any communication standard, such as any of the Institute of Electrical and Electronics Engineers (IEEE) IEEE 802.11 standards (including those identified as Wi-Fi^{®} technologies), the Bluetooth^{®} standard, code division multiple access (CDMA), frequency division multiple access (FDMA), time division multiple access (TDMA), Global System for Mobile communications (GSM), GSM/General Packet Radio Service (GPRS), Enhanced Data GSM Environment (EDGE), Terrestrial Trunked Radio (TETRA), Wideband-CDMA (W-CDMA), Evolution Data Optimized (EV-DO), 1xEV-DO, EV-DO Rev A, EV-DO Rev B, High Rate Packet Data (HRPD), High Speed Packet Access (HSPA), High Speed Downlink Packet Access (HSDPA), High Speed Uplink Packet Access (HSUPA), Evolved High Speed Packet Access (HSPA+), Long Term Evolution (LTE), Advanced Mobile Phone System (AMPS), or other known signals that are used to communicate within a wireless, cellular or internet of things (IoT) network, such as a system utilizing 3G, 4G, 5G, 6G, or further implementations thereof, technology.

A UE may have certain capabilities with regard to being able to transmit reference signals two one or more Transmission/Reception Point (TRPs) using multiple component carriers (CCs). The use of multiple reference signals in multiple CCs can effectively increase the bandwidth of the reference signals for a measurement taken to determine the location of the UE. More particularly, this increase in bandwidth comes by aggregating the reference signals (e.g., processing the reference signals jointly in the signal domain). The UE's ability to transmit reference signals that may be aggregated (e.g., by a TRP) may be limited by channel spacing, timing offset, phase offset (or phase misalignment), frequency error, power imbalance, and other such factors between reference signals of different CCs. Embodiments provided herein provide for a way in which a UE can provide a report to the network (e.g., a network node) with an indication of its capabilities with respect maintaining one or more phase characteristics (e.g., phase offset, phase ramp, phase slope, and/or phase time drift) between reference signals of different between reference signals of different CCs. The network can respond by configuring the UE accordingly. Additional details are provided herein.

As used herein, an "RF signal" comprises an electromagnetic wave that transports information through the space between a transmitter (or transmitting device) and a receiver (or receiving device). As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal.

Additionally, unless otherwise specified, references to "reference signals," "positioning reference signals," "reference signals for positioning," and the like may be used to refer to signals used for positioning of a user equipment (UE). As described in more detail herein, such signals may comprise any of a variety of signal types but may not necessarily be limited to a Positioning Reference Signal (PRS) as defined in relevant wireless standards.

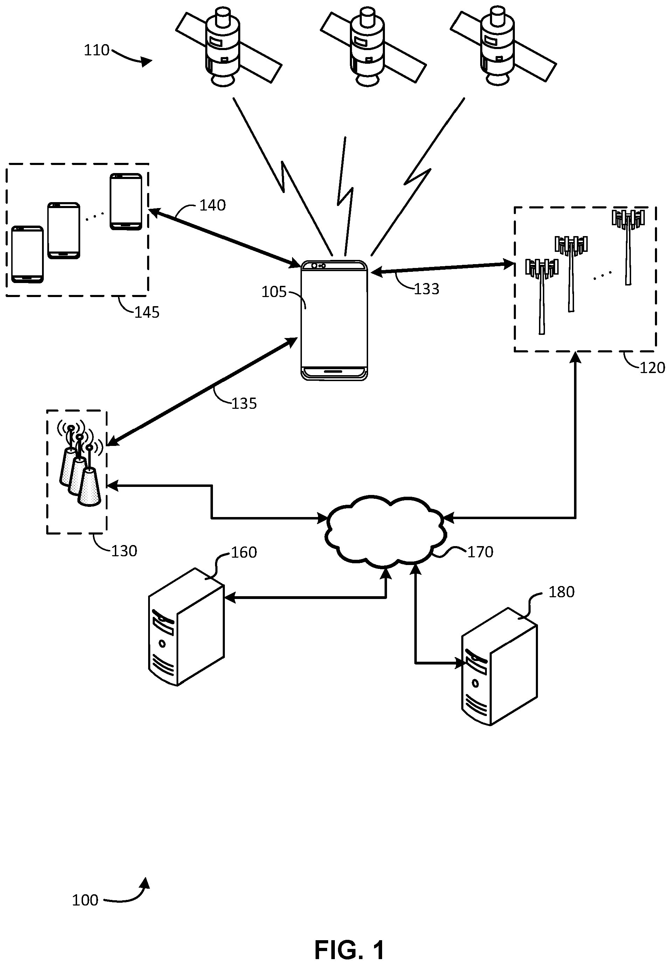

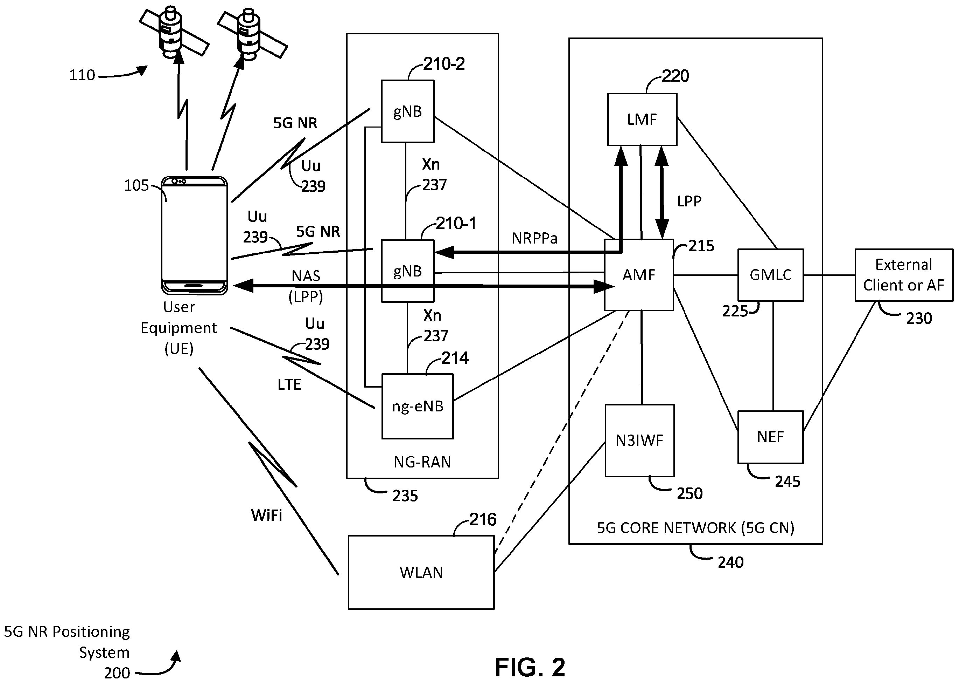

**FIG. 1** is a simplified illustration of a positioning system 100 in which a UE 105, location server 160, and/or other components of the positioning system 100 can use the techniques provided herein for providing phase characteristic capability reporting for SRS stitching, according to an embodiment. The techniques described herein may be implemented by one or more components of the positioning system 100. The positioning system 100 can include: a UE 105; one or more satellites 110 (also referred to as space vehicles (SVs)) for a Global Navigation Satellite System (GNSS) such as the Global Positioning System (GPS), GLONASS, Galileo or Beidou; base stations 120; access points (APs) 130; location server 160; network 170; and external client 180. Generally put, the positioning system 100 can estimate a location of the UE 105 based on RF signals received by and/or sent from the UE 105 and known locations of other components (e.g., GNSS satellites 110, base stations 120, APs 130) transmitting and/or receiving the RF signals. Additional details regarding particular location estimation techniques are discussed in more detail with regard to FIG. 2.

It should be noted that FIG. 1 provides only a generalized illustration of various components, any or all of which may be utilized as appropriate, and each of which may be duplicated as necessary. Specifically, although only one UE 105 is illustrated, it will be understood that many UEs (e.g., hundreds, thousands, millions, etc.) may utilize the positioning system 100. Similarly, the positioning system 100 may include a larger or smaller number of base stations 120 and/or APs 130 than illustrated in FIG. 1. The illustrated connections that connect the various components in the positioning system 100 comprise data and signaling connections which may include additional (intermediary) components, direct or indirect physical and/or wireless connections, and/or additional networks. Furthermore, components may be rearranged, combined, separated, substituted, and/or omitted, depending on desired functionality. In some embodiments, for example, the external client 180 may be directly connected to location server 160. A person of ordinary skill in the art will recognize many modifications to the components illustrated.

Depending on desired functionality, the network 170 may comprise any of a variety of wireless and/or wireline networks. The network 170 can, for example, comprise any combination of public and/or private networks, local and/or wide-area networks, and the like. Furthermore, the network 170 may utilize one or more wired and/or wireless communication technologies. In some embodiments, the network 170 may comprise a cellular or other mobile network, a wireless local area network (WLAN), a wireless wide-area network (WWAN), and/or the Internet, for example. Examples of network 170 include a Long-Term Evolution (LTE) wireless network, a Fifth Generation (5G) wireless network (also referred to as New Radio (NR) wireless network or 5G NR wireless network), a Wi-Fi WLAN, and the Internet. LTE, 5G and NR are wireless technologies defined, or being defined, by the 3rd Generation Partnership Project (3GPP). Network 170 may also include more than one network and/or more than one type of network.

The base stations 120 and access points (APs) 130 may be communicatively coupled to the network 170. In some embodiments, the base station 120s may be owned, maintained, and/or operated by a cellular network provider, and may employ any of a variety of wireless technologies, as described herein below. Depending on the technology of the network 170, a base station 120 may comprise a node B, an Evolved Node B (eNodeB or eNB), a base transceiver station (BTS), a radio base station (RBS), an NR NodeB (gNB), a Next Generation eNB (ng-eNB), or the like. A base station 120 that is a gNB or ng-eNB may be part of a Next Generation Radio Access Network (NG-RAN) which may connect to a 5G Core Network (5GC) in the case that Network 170 is a 5G network. An AP 130 may comprise a Wi-Fi AP or a Bluetooth^{®} AP or an AP having cellular capabilities (e.g., 4G LTE and/or 5G NR), for example. Thus, UE 105 can send and receive information with network-connected devices, such as location server 160, by accessing the network 170 via a base station 120 using a first communication link 133. Additionally or alternatively, because APs 130 also may be communicatively coupled with the network 170, UE 105 may communicate with network-connected and Internet-connected devices, including location server 160, using a second communication link 135, or via one or more other UEs 145.

As used herein, the term "base station" may generically refer to a single physical transmission point, or multiple co-located physical transmission points, which may be located at a base station 120. A Transmission Reception Point (TRP) (also known as transmit/receive point) corresponds to this type of transmission point, and the term "TRP" may be used interchangeably herein with the terms "gNB," "ng-eNB," and "base station." In some cases, a base station 120 may comprise multiple TRPs - e.g. with each TRP associated with a different antenna or a different antenna array for the base station 120. Physical transmission points may comprise an array of antennas of a base station 120 (e.g., as in a Multiple Input-Multiple Output (MIMO) system and/or where the base station employs beamforming). The term "base station" may additionally refer to multiple non-co-located physical transmission points, the physical transmission points may be a Distributed Antenna System (DAS) (a network of spatially separated antennas connected to a common source via a transport medium) or a Remote Radio Head (RRH) (a remote base station connected to a serving base station).

As used herein, the term "cell" may generically refer to a logical communication entity used for communication with a base station 120, and may be associated with an identifier for distinguishing neighboring cells (e.g., a Physical Cell Identifier (PCID), a Virtual Cell Identifier (VCID)) operating via the same or a different carrier. In some examples, a carrier may support multiple cells, and different cells may be configured according to different protocol types (e.g., Machine-Type Communication (MTC), Narrowband Internet-of-Things (NB-IoT), Enhanced Mobile Broadband (eMBB), or others) that may provide access for different types of devices. In some cases, the term "cell" may refer to a portion of a geographic coverage area (e.g., a sector) over which the logical entity operates.

The location server 160 may comprise a server and/or other computing device configured to determine an estimated location of UE 105 and/or provide data (e.g., "assistance data") to UE 105 to facilitate location measurement and/or location determination by UE 105. According to some embodiments, location server 160 may comprise a Home Secure User Plane Location (SUPL) Location Platform (H-SLP), which may support the SUPL user plane (UP) location solution defined by the Open Mobile Alliance (OMA) and may support location services for UE 105 based on subscription information for UE 105 stored in location server 160. In some embodiments, the location server 160 may comprise, a Discovered SLP (D-SLP) or an Emergency SLP (E-SLP). The location server 160 may also comprise an Enhanced Serving Mobile Location Center (E-SMLC) that supports location of UE 105 using a control plane (CP) location solution for LTE radio access by UE 105. The location server 160 may further comprise a Location Management Function (LMF) that supports location of UE 105 using a control plane (CP) location solution for NR or LTE radio access by UE 105.

In a CP location solution, signaling to control and manage the location of UE 105 may be exchanged between elements of network 170 and with UE 105 using existing network interfaces and protocols and as signaling from the perspective of network 170. In a UP location solution, signaling to control and manage the location of UE 105 may be exchanged between location server 160 and UE 105 as data (e.g. data transported using the Internet Protocol (IP) and/or Transmission Control Protocol (TCP)) from the perspective of network 170.

As previously noted (and discussed in more detail below), the estimated location of UE 105 may be based on measurements of RF signals sent from and/or received by the UE 105. In particular, these measurements can provide information regarding the relative distance and/or angle of the UE 105 from one or more components in the positioning system 100 (e.g., GNSS satellites 110, APs 130, base stations 120). The estimated location of the UE 105 can be estimated geometrically (e.g., using multiangulation and/or multilateration), based on the distance and/or angle measurements, along with known position of the one or more components.

Although terrestrial components such as APs 130 and base stations 120 may be fixed, embodiments are not so limited. Mobile components may be used. For example, in some embodiments, a location of the UE 105 may be estimated at least in part based on measurements of RF signals 140 communicated between the UE 105 and one or more other UEs 145, which may be mobile or fixed. When or more other UEs 145 are used in the position determination of a particular UE 105, the UE 105 for which the position is to be determined may be referred to as the "target UE," and each of the one or more other UEs 145 used may be referred to as an "anchor UE." For position determination of a target UE, the respective positions of the one or more anchor UEs may be known and/or jointly determined with the target UE. Direct communication between the one or more other UEs 145 and UE 105 may comprise sidelink and/or similar Device-to-Device (D2D) communication technologies. Sidelink, which is defined by 3GPP, is a form of D2D communication under the cellular-based LTE and NR standards.

An estimated location of UE 105 can be used in a variety of applications - e.g. to assist direction finding or navigation for a user of UE 105 or to assist another user (e.g. associated with external client 180) to locate UE 105. A "location" is also referred to herein as a "location estimate", "estimated location", "location", "position", "position estimate", "position fix", "estimated position", "location fix" or "fix". The process of determining a location may be referred to as "positioning," "position determination," "location determination," or the like. A location of UE 105 may comprise an absolute location of UE 105 (e.g. a latitude and longitude and possibly altitude) or a relative location of UE 105 (e.g. a location expressed as distances north or south, east or west and possibly above or below some other known fixed location (including, e.g., the location of a base station 120 or AP 130) or some other location such as a location for UE 105 at some known previous time, or a location of another UE 145 at some known previous time). A location may be specified as a geodetic location comprising coordinates which may be absolute (e.g. latitude, longitude and optionally altitude), relative (e.g. relative to some known absolute location) or local (e.g. X, Y and optionally Z coordinates according to a coordinate system defined relative to a local area such a factory, warehouse, college campus, shopping mall, sports stadium or convention center). A location may instead be a civic location and may then comprise one or more of a street address (e.g. including names or labels for a country, state, county, city, road and/or street, and/or a road or street number), and/or a label or name for a place, building, portion of a building, floor of a building, and/or room inside a building etc. A location may further include an uncertainty or error indication, such as a horizontal and possibly vertical distance by which the location is expected to be in error or an indication of an area or volume (e.g. a circle or ellipse) within which UE 105 is expected to be located with some level of confidence (e.g. 95% confidence).

The external client 180 may be a web server or remote application that may have some association with UE 105 (e.g. may be accessed by a user of UE 105) or may be a server, application, or computer system providing a location service to some other user or users which may include obtaining and providing the location of UE 105 (e.g. to enable a service such as friend or relative finder, asset tracking or child or pet location). Additionally or alternatively, the external client 180 may obtain and provide the location of UE 105 to an emergency services provider, government agency, etc.

As previously noted, the example positioning system 100 can be implemented using a wireless communication network, such as an LTE-based or 5G NR-based network. **FIG. 2** shows a diagram of a 5G NR positioning system 200, illustrating an embodiment of a positioning system (e.g., positioning system 100) implementing 5GNR. The 5G NR positioning system 200 may be configured to determine the location of a UE 105 by using access nodes, which may include NR NodeB (gNB) 210-1 and 210-2 (collectively and generically referred to herein as gNBs 210), ng-eNB 214, and/or WLAN 216 to implement one or more positioning methods. The gNBs 210 and/or the ng-eNB 214 may correspond with base stations 120 of FIG. 1, and the WLAN 216 may correspond with one or more access points 130 of FIG. 1. Optionally, the 5G NR positioning system 200 additionally may be configured to determine the location of a UE 105 by using an LMF 220 (which may correspond with location server 160) to implement the one or more positioning methods. Here, the 5G NR positioning system 200 comprises a UE 105, and components of a 5G NR network comprising a Next Generation (NG) Radio Access Network (RAN) (NG-RAN) 235 and a 5G Core Network (5G CN) 240. A 5G network may also be referred to as an NR network; NG-RAN 235 may be referred to as a 5G RAN or as an NR RAN; and 5G CN 240 may be referred to as an NG Core network. The 5G NR positioning system 200 may further utilize information from GNSS satellites 110 from a GNSS system like Global Positioning System (GPS) or similar system (e.g. GLONASS, Galileo, Beidou, Indian Regional Navigational Satellite System (IRNSS)). Additional components of the 5G NR positioning system 200 are described below. The 5G NR positioning system 200 may include additional or alternative components.

It should be noted that FIG. 2 provides only a generalized illustration of various components, any or all of which may be utilized as appropriate, and each of which may be duplicated or omitted as necessary. Specifically, although only one UE 105 is illustrated, it will be understood that many UEs (e.g., hundreds, thousands, millions, etc.) may utilize the 5G NR positioning system 200. Similarly, the 5G NR positioning system 200 may include a larger (or smaller) number of GNSS satellites 110, gNBs 210, ng-eNBs 214, Wireless Local Area Networks (WLANs) 216, Access and mobility Management Functions (AMF)s 215, external clients 230, and/or other components. The illustrated connections that connect the various components in the 5G NR positioning system 200 include data and signaling connections which may include additional (intermediary) components, direct or indirect physical and/or wireless connections, and/or additional networks. Furthermore, components may be rearranged, combined, separated, substituted, and/or omitted, depending on desired functionality.

The UE 105 may comprise and/or be referred to as a device, a mobile device, a wireless device, a mobile terminal, a terminal, a mobile station (MS), a Secure User Plane Location (SUPL)-Enabled Terminal (SET), or by some other name. Moreover, UE 105 may correspond to a cellphone, smartphone, laptop, tablet, personal data assistant (PDA), navigation device, Internet of Things (IoT) device, or some other portable or moveable device. Typically, though not necessarily, the UE 105 may support wireless communication using one or more Radio Access Technologies (RATs) such as using GSM, CDMA, W-CDMA, LTE, High Rate Packet Data (HRPD), IEEE 802.11 Wi-Fi^{®}, Bluetooth, Worldwide Interoperability for Microwave Access (WiMAX^{™}), 5GNR (e.g., using the NG-RAN 235 and 5G CN 240), etc. The UE 105 may also support wireless communication using a WLAN 216 which (like the one or more RATs, and as previously noted with respect to FIG. 1) may connect to other networks, such as the Internet. The use of one or more of these RATs may allow the UE 105 to communicate with an external client 230 (e.g., via elements of 5G CN 240 not shown in FIG. 2, or possibly via a Gateway Mobile Location Center (GMLC) 225) and/or allow the external client 230 to receive location information regarding the UE 105 (e.g., via the GMI,C 225). The external client 230 of FIG. 2 may correspond to external client 180 of FIG. 1, as implemented in or communicatively coupled with a 5G NR network.

The UE 105 may include a single entity or may include multiple entities, such as in a personal area network where a user may employ audio, video and/or data I/O devices, and/or body sensors and a separate wireline or wireless modem. An estimate of a location of the UE 105 may be referred to as a location, location estimate, location fix, fix, position, position estimate, or position fix, and may be geodetic, thus providing location coordinates for the UE 105 (e.g., latitude and longitude), which may or may not include an altitude component (e.g., height above sea level, height above or depth below ground level, floor level or basement level). Alternatively, a location of the UE 105 may be expressed as a civic location (e.g., as a postal address or the designation of some point or small area in a building such as a particular room or floor). A location of the UE 105 may also be expressed as an area or volume (defined either geodetically or in civic form) within which the UE 105 is expected to be located with some probability or confidence level (e.g., 67%, 95%, etc.). A location of the UE 105 may further be a relative location comprising, for example, a distance and direction or relative X, Y (and Z) coordinates defined relative to some origin at a known location which may be defined geodetically, in civic terms, or by reference to a point, area, or volume indicated on a map, floor plan or building plan. In the description contained herein, the use of the term location may comprise any of these variants unless indicated otherwise. When computing the location of a UE, it is common to solve for local X, Y, and possibly Z coordinates and then, if needed, convert the local coordinates into absolute ones (e.g. for latitude, longitude and altitude above or below mean sea level).

Base stations in the NG-RAN 235 shown in FIG. 2 may correspond to base stations 120 in FIG. 1 and may include gNBs 210. Pairs of gNBs 210 in NG-RAN 235 may be connected to one another (e.g., directly as shown in FIG. 2 or indirectly via other gNBs 210). The communication interface between base stations (gNBs 210 and/or ng-eNB 214) may be referred to as an Xn interface 237. Access to the 5G network is provided to UE 105 via wireless communication between the UE 105 and one or more of the gNBs 210, which may provide wireless communications access to the 5G CN 240 on behalf of the UE 105 using 5G NR. The wireless interface between base stations (gNBs 210 and/or ng-eNB 214) and the UE 105 may be referred to as a Uu interface 239. 5G NR radio access may also be referred to as NR radio access or as 5G radio access. In FIG. 2, the serving gNB for UE 105 is assumed to be gNB 210-1, although other gNBs (e.g. gNB 210-2) may act as a serving gNB if UE 105 moves to another location or may act as a secondary gNB to provide additional throughput and bandwidth to UE 105.

Base stations in the NG-RAN 235 shown in FIG. 2 may also or instead include a next generation evolved Node B, also referred to as an ng-eNB, 214. Ng-eNB 214 may be connected to one or more gNBs 210 in NG-RAN 235-e.g. directly or indirectly via other gNBs 210 and/or other ng-eNBs. An ng-eNB 214 may provide LTE wireless access and/or evolved LTE (eLTE) wireless access to UE 105. Some gNBs 210 (e.g. gNB 210-2) and/or ng-eNB 214 in FIG. 2 may be configured to function as positioning-only beacons which may transmit signals (e.g., Positioning Reference Signal (PRS)) and/or may broadcast assistance data to assist positioning of UE 105 but may not receive signals from UE 105 or from other UEs. Some gNBs 210 (e.g., gNB 210-2 and/or another gNB not shown) and/or ng-eNB 214 may be configured to function as detecting-only nodes may scan for signals containing, e.g., PRS data, assistance data, or other location data. Such detecting-only nodes may not transmit signals or data to UEs but may transmit signals or data (relating to, e.g., PRS, assistance data, or other location data) to other network entities (e.g., one or more components of 5G CN 240, external client 230, or a controller) which may receive and store or use the data for positioning of at least UE 105. It is noted that while only one ng-eNB 214 is shown in FIG. 2, some embodiments may include multiple ng-eNBs 214. Base stations (e.g., gNBs 210 and/or ng-eNB 214) may communicate directly with one another via an Xn communication interface. Additionally or alternatively, base stations may communicate directly or indirectly with other components of the 5G NR positioning system 200, such as the LMF 220 and AMF 215.

5G NR positioning system 200 may also include one or more WLANs 216 which may connect to a Non-3GPP InterWorking Function (N3IWF) 250 in the 5G CN 240 (e.g., in the case of an untrusted WLAN 216). For example, the WLAN 216 may support IEEE 802.11 Wi-Fi access for UE 105 and may comprise one or more Wi-Fi APs (e.g., APs 130 of FIG. 1). Here, the N3IWF 250 may connect to other elements in the 5G CN 240 such as AMF 215. In some embodiments, WLAN 216 may support another RAT such as Bluetooth. The N3IWF 250 may provide support for secure access by UE 105 to other elements in 5G CN 240 and/or may support interworking of one or more protocols used by WLAN 216 and UE 105 to one or more protocols used by other elements of 5G CN 240 such as AMF 215. For example, N3IWF 250 may support IPSec tunnel establishment with UE 105, termination of IKEv2/IPSec protocols with UE 105, termination of N2 and N3 interfaces to 5G CN 240 for control plane and user plane, respectively, relaying of uplink (UL) and downlink (DL) control plane Non-Access Stratum (NAS) signaling between UE 105 and AMF 215 across an N1 interface. In some other embodiments, WLAN 216 may connect directly to elements in 5G CN 240 (e.g. AMF 215 as shown by the dashed line in FIG. 2) and not via N3IWF 250. For example, direct connection of WLAN 216 to 5GCN 240 may occur if WLAN 216 is a trusted WLAN for 5GCN 240 and may be enabled using a Trusted WLAN Interworking Function (TWIF) (not shown in FIG. 2) which may be an element inside WLAN 216. It is noted that while only one WLAN 216 is shown in FIG. 2, some embodiments may include multiple WLANs 216.

Access nodes may comprise any of a variety of network entities enabling communication between the UE 105 and the AMF 215. As noted, this can include gNBs 210, ng-eNB 214, WLAN 216, and/or other types of cellular base stations. However, access nodes providing the functionality described herein may additionally or alternatively include entities enabling communications to any of a variety of RATs not illustrated in FIG. 2, which may include non-cellular technologies. Thus, the term "access node," as used in the embodiments described herein below, may include but is not necessarily limited to a gNB 210, ng-eNB 214 or WLAN 216.

In some embodiments, an access node, such as a gNB 210, ng-eNB 214, and/or WLAN 216 (alone or in combination with other components of the 5G NR positioning system 200), may be configured to, in response to receiving a request for location information from the LMF 220, obtain location measurements of uplink (UL) signals received from the UE 105) and/or obtain downlink (DL) location measurements from the UE 105 that were obtained by UE 105 for DL signals received by UE 105 from one or more access nodes. As noted, while FIG. 2 depicts access nodes (gNB 210, ng-eNB 214, and WLAN 216) configured to communicate according to 5G NR, LTE, and Wi-Fi communication protocols, respectively, access nodes configured to communicate according to other communication protocols may be used, such as, for example, a Node B using a Wideband Code Division Multiple Access (WCDMA) protocol for a Universal Mobile Telecommunications Service (UMTS) Terrestrial Radio Access Network (UTRAN), an eNB using an LTE protocol for an Evolved UTRAN (E-UTRAN), or a Bluetooth^{®} beacon using a Bluetooth protocol for a WLAN. For example, in a 4G Evolved Packet System (EPS) providing LTE wireless access to UE 105, a RAN may comprise an E-UTRAN, which may comprise base stations comprising eNBs supporting LTE wireless access. A core network for EPS may comprise an Evolved Packet Core (EPC). An EPS may then comprise an E-UTRAN plus an EPC, where the E-UTRAN corresponds to NG-RAN 235 and the EPC corresponds to 5GCN 240 in FIG. 2. The methods and techniques described herein for obtaining a civic location for UE 105 may be applicable to such other networks.

The gNBs 210 and ng-eNB 214 can communicate with an AMF 215, which, for positioning functionality, communicates with an LMF 220. The AMF 215 may support mobility of the UE 105, including cell change and handover of UE 105 from an access node (e.g., gNB 210, ng-eNB 214, or WLAN 216)of a first RAT to an access node of a second RAT. The AMF 215 may also participate in supporting a signaling connection to the UE 105 and possibly data and voice bearers for the UE 105. The LMF 220 may support positioning of the UE 105 using a CP location solution when UE 105 accesses the NG-RAN 235 or WLAN 216 and may support position procedures and methods, including UE assisted/UE based and/or network based procedures/methods, such as Assisted GNSS (A-GNSS), Observed Time Difference Of Arrival (OTDOA) (which may be referred to in NR as Time Difference Of Arrival (TDOA)), Real Time Kinematic (RTK), Precise Point Positioning (PPP), Differential GNSS (DGNSS), Enhance Cell ID (ECID), angle of arrival (AoA), angle of departure (AoD), WLAN positioning, round trip signal propagation delay (RTT), multi-cell RTT, and/or other positioning procedures and methods. The LMF 220 may also process location service requests for the UE 105, e.g., received from the AMF 215 or from the GMI,C 225. The LMF 220 may be connected to AMF 215 and/or to GMI,C 225. In some embodiments, a network such as 5GCN 240 may additionally or alternatively implement other types of location-support modules, such as an Evolved Serving Mobile Location Center (E-SMLC) or a SUPL Location Platform (SLP). It is noted that in some embodiments, at least part of the positioning functionality (including determination of a UE 105's location) may be performed at the UE 105 (e.g., by measuring downlink PRS (DL-PRS) signals transmitted by wireless nodes such as gNBs 210, ng-eNB 214 and/or WLAN 216, and/or using assistance data provided to the UE 105, e.g., by LMF 220).

The Gateway Mobile Location Center (GMLC) 225 may support a location request for the UE 105 received from an external client 230 and may forward such a location request to the AMF 215 for forwarding by the AMF 215 to the LMF 220. A location response from the LMF 220 (e.g., containing a location estimate for the UE 105) may be similarly returned to the GMLC 225 either directly or via the AMF 215, and the GMLC 225 may then return the location response (e.g., containing the location estimate) to the external client 230.

A Network Exposure Function (NEF) 245 may be included in 5GCN 240. The NEF 245 may support secure exposure of capabilities and events concerning 5GCN 240 and UE 105 to the external client 230, which may then be referred to as an Access Function (AF) and may enable secure provision of information from external client 230 to 5GCN 240. NEF 245 may be connected to AMF 215 and/or to GMLC 225 for the purposes of obtaining a location (e.g. a civic location) of UE 105 and providing the location to external client 230.

As further illustrated in FIG. 2, the LMF 220 may communicate with the gNBs 210 and/or with the ng-eNB 214 using an NR Positioning Protocol annex (NRPPa) as defined in 3GPP Technical Specification (TS) 38.455. NRPPa messages may be transferred between a gNB 210 and the LMF 220, and/or between an ng-eNB 214 and the LMF 220, via the AMF 215. As further illustrated in FIG. 2, LMF 220 and UE 105 may communicate using an LTE Positioning Protocol (LPP) as defined in 3GPP TS 37.355. Here, LPP messages may be transferred between the UE 105 and the LMF 220 via the AMF 215 and a serving gNB 210-1 or serving ng-eNB 214 for UE 105. For example, LPP messages may be transferred between the LMF 220 and the AMF 215 using messages for service-based operations (e.g., based on the Hypertext Transfer Protocol (HTTP)) and may be transferred between the AMF 215 and the UE 105 using a 5G NAS protocol. The LPP protocol may be used to support positioning of UE 105 using UE assisted and/or UE based position methods such as A-GNSS, RTK, TDOA, multi-cell RTT, AoD, and/or ECID. The NRPPa protocol may be used to support positioning of UE 105 using network based position methods such as ECID, AoA, uplink TDOA (UL-TDOA) and/or may be used by LMF 220 to obtain location related information from gNBs 210 and/or ng-eNB 214, such as parameters defining DL-PRS transmission from gNBs 210 and/or ng-eNB 214.

In the case of UE 105 access to WLAN 216, LMF 220 may use NRPPa and/or LPP to obtain a location of UE 105 in a similar manner to that just described for UE 105 access to a gNB 210 or ng-eNB 214. Thus, NRPPa messages may be transferred between a WLAN 216 and the LMF 220, via the AMF 215 and N3IWF 250 to support network-based positioning of UE 105 and/or transfer of other location information from WLAN 216 to LMF 220. Alternatively, NRPPa messages may be transferred between N3IWF 250 and the LMF 220, via the AMF 215, to support network-based positioning of UE 105 based on location related information and/or location measurements known to or accessible to N3IWF 250 and transferred from N3IWF 250 to LMF 220 using NRPPa. Similarly, LPP and/or LPP messages may be transferred between the UE 105 and the LMF 220 via the AMF 215, N3IWF 250, and serving WLAN 216 for UE 105 to support UE assisted or UE based positioning of UE 105 by LMF 220.

In a 5G NR positioning system 200, positioning methods can be categorized as being "UE assisted" or "UE based." This may depend on where the request for determining the position of the UE 105 originated. If, for example, the request originated at the UE (e.g., from an application, or "app," executed by the UE), the positioning method may be categorized as being UE based. If, on the other hand, the request originates from an external client or AF 230, LMF 220, or other device or service within the 5G network, the positioning method may be categorized as being UE assisted (or "network-based").

With a UE-assisted position method, UE 105 may obtain location measurements and send the measurements to a location server (e.g., LMF 220) for computation of a location estimate for UE 105. For RAT-dependent position methods location measurements may include one or more of a Received Signal Strength Indicator (RSSI), Round Trip signal propagation Time (RTT), Reference Signal Received Power (RSRP), Reference Signal Received Quality (RSRQ), Reference Signal Time Difference (RSTD), Time of Arrival (TOA), AoA, Receive Time-Transmission Time Difference (Rx-Tx), Differential AoA (DAoA), AoD, or Timing Advance (TA) for gNBs 210, ng-eNB 214, and/or one or more access points for WLAN 216. Additionally or alternatively, similar measurements may be made of sidelink signals transmitted by other UEs, which may serve as anchor points for positioning of the UE 105 if the positions of the other UEs are known. The location measurements may also or instead include measurements for RAT-independent positioning methods such as GNSS (e.g., GNSS pseudorange, GNSS code phase, and/or GNSS carrier phase for GNSS satellites 110), WLAN, etc.

With a UE-based position method, UE 105 may obtain location measurements (e.g., which may be the same as or similar to location measurements for a UE assisted position method) and may further compute a location of UE 105 (e.g., with the help of assistance data received from a location server such as LMF 220, an SLP, or broadcast by gNBs 210, ng-eNB 214, or WLAN 216).

With a network based position method, one or more base stations (e.g., gNBs 210 and/or ng-eNB 214), one or more APs (e.g., in WLAN 216), or N3IWF 250 may obtain location measurements (e.g., measurements of RSSI, RTT, RSRP, RSRQ, AoA, or TOA) for signals transmitted by UE 105, and/or may receive measurements obtained by UE 105 or by an AP in WLAN 216 in the case of N3IWF 250, and may send the measurements to a location server (e.g., LMF 220) for computation of a location estimate for UE 105.

Positioning of the UE 105 also may be categorized as UL, DL, or DL-UL based, depending on the types of signals used for positioning. If, for example, positioning is based solely on signals received at the UE 105 (e.g., from a base station or other UE), the positioning may be categorized as DL based. On the other hand, if positioning is based solely on signals transmitted by the UE 105 (which may be received by a base station or other UE, for example), the positioning may be categorized as UL based. Positioning that is DL-UL based includes positioning, such as RTT-based positioning, that is based on signals that are both transmitted and received by the UE 105. Sidelink (SL)-assisted positioning comprises signals communicated between the UE 105 and one or more other UEs. According to some embodiments, UL, DL, or DL-UL positioning as described herein may be capable of using SL signaling as a complement or replacement of SL, DL, or DL-UL signaling.

Depending on the type of positioning (e.g., UL, DL, or DL-UL based) the types of reference signals used can vary. For DL-based positioning, for example, these signals may comprise PRS (e.g., DL-PRS transmitted by base stations or SL-PRS transmitted by other UEs), which can be used for TDOA, AoD, and RTT measurements. Other reference signals that can be used for positioning (UL, DL, or DL-UL) may include Sounding Reference Signal (SRS), Channel State Information Reference Signal (CSI-RS), synchronization signals (e.g., synchronization signal block (SSB) Synchronizations Signal (SS)), Physical Uplink Control Channel (PUCCH), Physical Uplink Shared Channel (PUSCH), Physical Sidelink Shared Channel (PSSCH), Demodulation Reference Signal (DMRS), etc. Moreover, reference signals may be transmitted in a Tx beam and/or received in an Rx beam (e.g., using beamforming techniques), which may impact angular measurements, such as AoD and/or AoA.

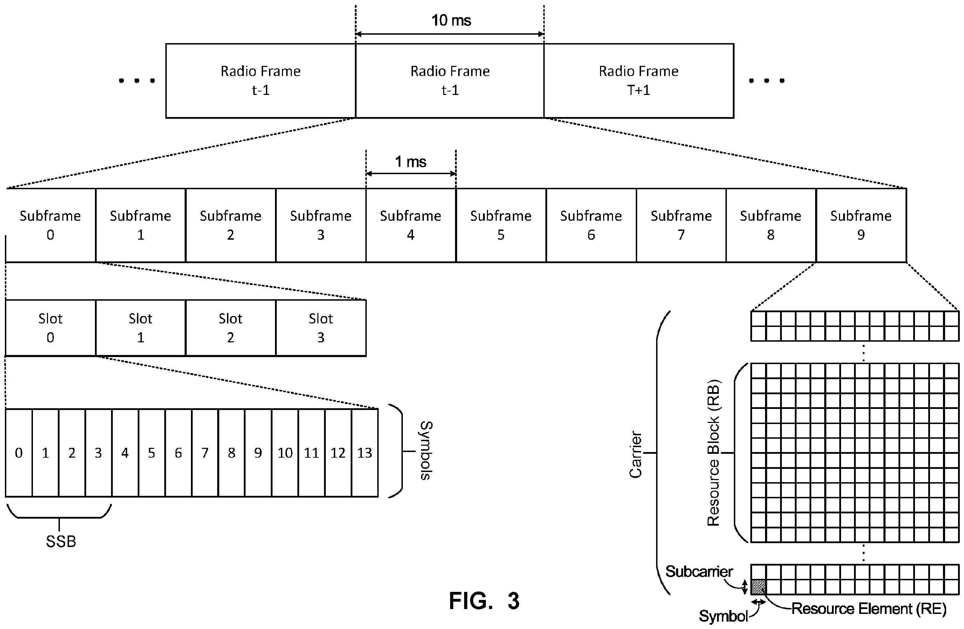

**FIG. 3** is a diagram showing an example of a frame structure for NR and associated terminology, which can serve as the basis for physical layer communication between the UE 105 and base stations/TRPs. The transmission timeline for each of the downlink and uplink may be partitioned into units of radio frames. Each radio frame may have a predetermined duration (e.g., 10 ms) and may be partitioned into 10 subframes, each of 1 ms, with indices of 0 through 9. Each subframe may include a variable number of slots depending on the subcarrier spacing. Each slot may include a variable number of symbol periods (e.g., 7 or 14 symbols) depending on the subcarrier spacing. The symbol periods in each slot may be assigned indices. A mini slot may comprise a sub slot structure (e.g., 2, 3, or 4 symbols). Additionally shown in FIG. 3 is the complete Orthogonal Frequency-Division Multiplexing (OFDM) of a subframe, showing how a subframe can be divided across both time and frequency into a plurality of Resource Blocks (RBs). A single RB can comprise a grid of Resource Elements (REs) spanning 14 symbols and 12 subcarriers.

Each symbol in a slot may indicate a link direction (e.g., downlink (DL), uplink (UL), or flexible) or data transmission and the link direction for each subframe may be dynamically switched. The link directions may be based on the slot format. Each slot may include DL/UL data as well as DL/UL control information. In NR, a synchronization signal (SS) block is transmitted. The SS block includes a primary SS (PSS), a secondary SS (SSS), and a two symbol Physical Broadcast Channel (PBCH). The SS block can be transmitted in a fixed slot location, such as the symbols 0-3 as shown in FIG. 3. The PSS and SSS may be used by UEs for cell search and acquisition. The PSS may provide half-frame timing, the SS may provide the cyclic prefix (CP) length and frame timing. The PSS and SSS may provide the cell identity. The PBCH carries some basic system information, such as downlink system bandwidth, timing information within radio frame, SS burst set periodicity, system frame number, etc.

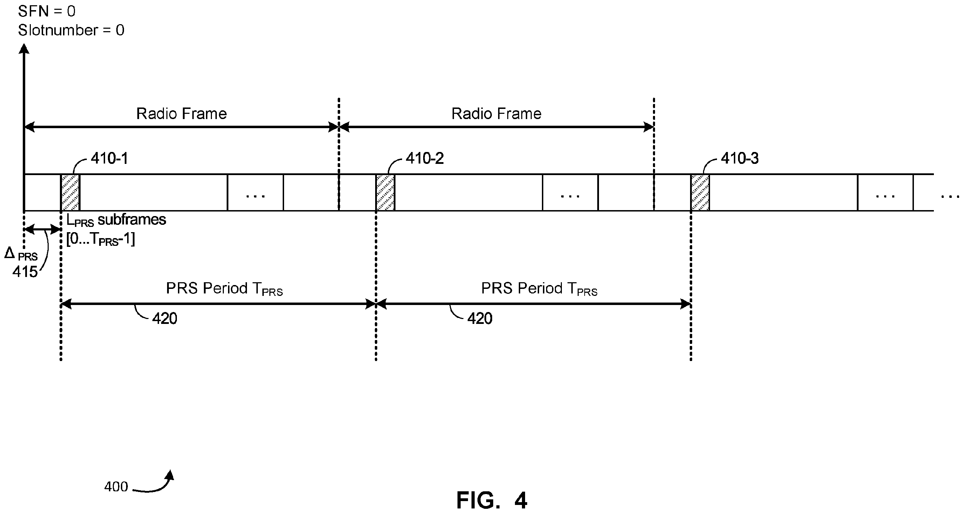

FIGS. 4-7 are provided to offer some background regarding PRS transmission for positioning within a wireless communication network. It can be noted that, although embodiments described with regard to FIGS. 4-7 frequently refer to DL-PRS, aspects such as comb type, resource repetition, and the like similarly apply to uplink reference signals (e.g., SRS/UL-PRS).

**FIG. 4** is a diagram showing an example of a radio frame sequence 400 with PRS positioning occasions. A "PRS instance" or "PRS occasion" is one instance of a periodically repeated time window (e.g., a group of one or more consecutive slots) where PRS resources (explained in more detail below) are expected to be transmitted. A PRS occasion may also be referred to as a "PRS positioning occasion," a "PRS positioning instance, a "positioning occasion," "a positioning instance," or simply an "occasion" or "instance." Subframe sequence 400 may be applicable to broadcast of PRS signals (DL-PRS signals) from base stations 120 in positioning system 100. The radio frame sequence 400 may be used in 5G NR (e.g., in 5G NR positioning system 200) and/or in LTE. Similar to FIG. 3, time is represented horizontally (e.g., on an X axis) in FIG. 4, with time increasing from left to right. Frequency is represented vertically (e.g., on a Y axis) with frequency increasing (or decreasing) from bottom to top.

FIG. 4 shows how PRS positioning occasions 410-1, 410-2, and 410-3 (collectively and generically referred to herein as positioning occasions 410) are determined by a System Frame Number (SFN), a cell-specific subframe offset (Δ_{PRS}) 415, a length or span of L_{PRS} subframes, and the PRS Periodicity (*T*_{PRS}) 420. The cell-specific PRS subframe configuration may be defined by a "PRS Configuration Index," *I*_{PRS}, included in assistance data (e.g., TDOA assistance data), which may be defined by governing 3GPP standards. The cell-specific subframe offset (Δ_{PRS}) 415 may be defined in terms of the number of subframes transmitted starting from System Frame Number (SFN) 0 to the start of the first (subsequent) PRS positioning occasion.

A PRS may be transmitted by wireless nodes (e.g., base stations 120 or other UEs) after appropriate configuration (e.g., by an Operations and Maintenance (O&M) server). A PRS may be transmitted in special positioning subframes or slots that are grouped into positioning occasions 410. For example, a PRS positioning occasion 410-1 can comprise a number *N_{PRS}* of consecutive positioning subframes where the number *N_{PRS}* may be between 1 and 160 (e.g., may include the values 1, 2, 4 and 6 as well as other values). PRS occasions 410 may be grouped into one or more PRS occasion groups. As noted, PRS positioning occasions 410 may occur periodically at intervals, denoted by a number *T_{PRS},* of millisecond (or subframe) intervals where *T_{PRS}* may equal 5, 10, 20, 40, 80, 160, 320, 640, or 1280 (or any other appropriate value). In some embodiments, *T_{PRS}* may be measured in terms of the number of subframes between the start of consecutive positioning occasions.

In some embodiments, when a UE 105 receives a PRS configuration index *I*_{PRS} in the assistance data for a particular cell (e.g., base station), the UE 105 may determine the PRS periodicity *T_{PRS}* 420 and cell-specific subframe offset (Δ_{PRS}) 415 using stored indexed data. The UE 105 may then determine the radio frame, subframe, and slot when a PRS is scheduled in the cell. The assistance data may be determined by, for example, a location server (e.g., location server 160 in FIG. 1 and/or LMF 220 in FIG. 2), and includes assistance data for a reference cell, and a number of neighbor cells supported by various wireless nodes.

Typically, PRS occasions from all cells in a network that use the same frequency are aligned in time and may have a fixed known time offset (e.g., cell-specific subframe offset (Δ_{PRS}) 415) relative to other cells in the network that use a different frequency. In SFN-synchronous networks all wireless nodes (e.g., base stations 120) may be aligned on both frame boundary and system frame number. Therefore, in SFN-synchronous networks all cells supported by the various wireless nodes may use the same PRS configuration index for any particular frequency of PRS transmission. On the other hand, in SFN-asynchronous networks, the various wireless nodes may be aligned on a frame boundary, but not system frame number. Thus, in SFN-asynchronous networks the PRS configuration index for each cell may be configured separately by the network so that PRS occasions align in time. A UE 105 may determine the timing of the PRS occasions 410 of the reference and neighbor cells for TDOA positioning, if the UE 105 can obtain the cell timing (e.g., SFN or Frame Number) of at least one of the cells, e.g., the reference cell or a serving cell. The timing of the other cells may then be derived by the UE 105 based, for example, on the assumption that PRS occasions from different cells overlap.

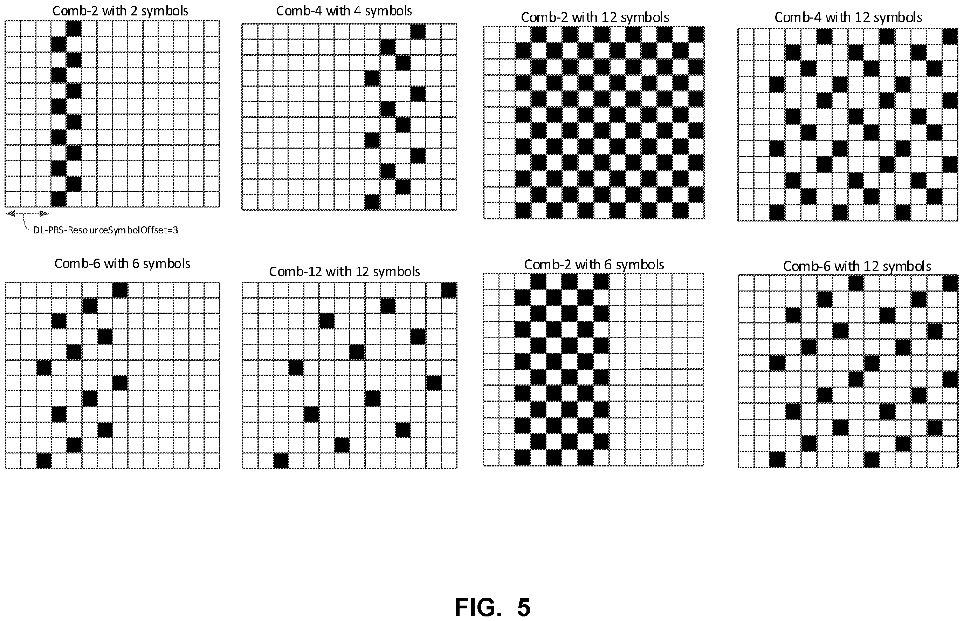

With reference to the frame structure in FIG. 3, a collection of REs that are used for transmission of PRS is referred to as a "PRS resource." The collection of resource elements can span multiple RBs in the frequency domain and one or more consecutive symbols within a slot in the time domain, inside which pseudo-random Quadrature Phase Shift Keying (QPSK) sequences are transmitted from an antenna port of a TRP. In a given OFDM symbol in the time domain, a PRS resource occupies consecutive RBs in the frequency domain. The transmission of a PRS resource within a given RB has a particular combination, or "comb," size. (Comb size also may be referred to as the "comb density.") A comb size "N" represents the subcarrier spacing (or frequency/tone spacing) within each symbol of a PRS resource configuration, where the configuration uses every Nth subcarrier of certain symbols of an RB. For example, for comb-4, for each of the four symbols of the PRS resource configuration, REs corresponding to every fourth subcarrier (e.g., subcarriers 0, 4, 8) are used to transmit PRS of the PRS resource. Comb sizes of comb-2, comb-4, comb-6, and comb-12, for example, may be used in PRS. Examples of different comb sizes using with different numbers of symbols are provided in **FIG. 5****.**

A "PRS resource set" comprises a group of PRS resources used for the transmission of PRS signals, where each PRS resource has a PRS resource ID. In addition, the PRS resources in a PRS resource set are associated with the same TRP. A PRS resource set is identified by a PRS resource set ID and is associated with a particular TRP (identified by a cell ID). A "PRS resource repetition" is a repetition of a PRS resource during a PRS occasion/instance. The number of repetitions of a PRS resource may be defined by a "repetition factor" for the PRS resource. In addition, the PRS resources in a PRS resource set may have the same periodicity, a common muting pattern configuration, and the same repetition factor across slots. The periodicity may have a length selected from *2^{m}*·{4, 5, 8, 10, 16, 20, 32, 40, 64, 80, 160, 320, 640, 1280, 2560, 5120, 10240} slots, with µ = 0, 1, 2, 3. The repetition factor may have a length selected from {1, 2, 4, 6, 8, 16, 32} slots.

A PRS resource ID in a PRS resource set may be associated with a single beam (and/or beam ID) transmitted from a single TRP (where a TRP may transmit one or more beams). That is, each PRS resource of a PRS resource set may be transmitted on a different beam, and as such, a PRS resource (or simply "resource") can also be referred to as a "beam." Note that this does not have any implications on whether the TRPs and the beams on which PRS are transmitted are known to the UE.

In the 5G NR positioning system 200 illustrated in FIG. 2, a TRP (gNB 210, ng-eNB 214, and/or WLAN 216)may transmit frames, or other physical layer signaling sequences, supporting PRS signals (i.e. a DL-PRS) according to frame configurations as previously described, which may be measured and used for position determination of the UE 105. As noted, other types of wireless network nodes, including other UEs, may also be configured to transmit PRS signals configured in a manner similar to (or the same as) that described above. Because transmission of a PRS by a wireless network node may be directed to all UEs within radio range, the wireless network node may be considered to transmit (or broadcast) a PRS.

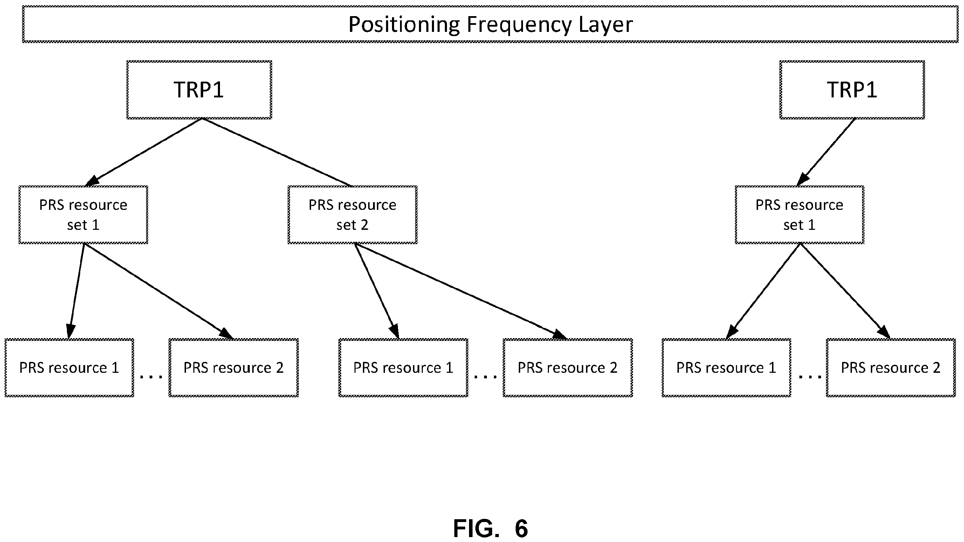

**FIG. 6** is a diagram of a hierarchical structure of how PRS resources and PRS resource sets may be used by different TRPs of a given position frequency layer (PFL), as defined in 5G NR. With respect to a network (Uu) interface, a UE 105 can be configured with one or more DL-PRS resource sets from each of one or more TRPs. Each DL-PRS resource set includes K ≥ 1 DL-PRS resource(s), which, as previously noted, may correspond to a Tx beam of the TRP. A DL-PRS PFL is defined as a collection of DL-PRS resource sets which have the same subcarrier spacing (SCS) and cyclic prefix (CP) type, the same value of DL-PRS bandwidth, the same center frequency, and the same value of comb size. In current iterations of the NR standard, a UE 105 can be configured with up to four DL-PRS PFLs.

NR has multiple frequency bands across different frequency ranges (e.g., Frequency Range 1 (FR1) and Frequency Range 2 (FR2)). PFLs may be on the same band or different bands. In some embodiments, they may even be in different frequency ranges. Additionally, as illustrated in FIG.6, multiple TRPs (e.g., TRP1 and TR2) may be on the same PFL. Currently under NR, each TRP can have up to two PRS resource sets, each with one or more PRS resources, as previously described.

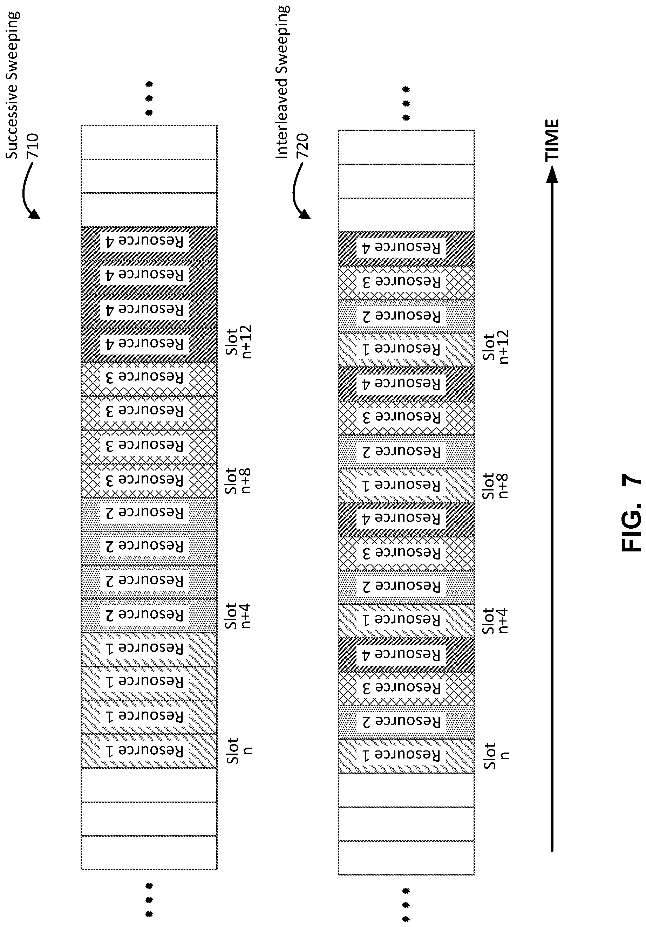

Different PRS resource sets may have different periodicity. For example, one PRS resource set may be used for tracking, and another PRS resource that could be used for acquisition. Additionally or alternatively, one PRS resource set may have more beams, and another may have fewer beams. Accordingly, different resource sets may be used by a wireless network for different purposes. Example repetition and beam sweeping options for resource sets are illustrated in FIG. 7.

**FIG. 7** is a time diagram illustrating two different options for slot usage of a resource set, according to an embodiment. Because each example repeats each resource four times, the resource set is said to have a repetition factor of four. Successive sweeping 710 comprises repeating a single resource (resource 1, resource 2, etc.) four times before proceeding to a subsequent resource. In this example, if each resource corresponds to a different beam of a TRP, the TRP repeats a beam for four slots in a row before moving to the next beam. Because each resource is repeated in successive slots (e.g., resource 1 is repeated in slots n, n+1, n+2, etc.), the time gap is said to be one slot. On the other hand, for interleaved sweeping 720, the TRP may move from one beam to the next for each subsequent slot, rotating through four beams for four rounds. Because each resource is repeated every four slots (e.g., resource 1 is repeated in slots n, n+4, n+8, etc.), the time gap is said to be one slot. Of course, embodiments are not so limited. Resource sets may comprise a different amount of resources and/or repetitions. Moreover, as noted above, each TRP may have multiple resource sets, multiple TRPs may utilize a single PFL, and a UE may be capable of taking measurements of PRS resources transmitted via multiple FLs.

Thus, to obtain PRS measurements from PRS signals sent by TRPs and/or UEs in a network, the UE can be configured to observe PRS resources during a period of time called a measurement period. That is, to determine a position of the UE using PRS signals, a UE and a location server (e.g., LMF 220 of FIG. 2) may initiate a location session in which the UE is given a period of time to observe PRS resources and report resulting PRS measurements to the location server. As described in more detail below, this measurement period may be determined based on the capabilities of the UE.

Similar functionality can be implemented to obtain SRS-based measurements. That is, for a network to obtain SRS measurements using one or more TRPs (and/or other UEs) from SRS resources transmitted by a UE 105, the network can configure the UE 105 to transmit the SRS resources at a certain period of time. Just as a UE 105 may be configured to measure DL-PRS resources of multiple PFLs, a UE 105 can be configured to transmit multiple SRS resources using multiple CCs. Accordingly, the network may configure the UE 105 to use certain CCs to transmit multiple SRS resources. As previously noted, although SRS resources may be separated in frequency and/or time, TRPs may aggregate multiple SRS resources in certain conditions (e.g., when SRS resources are related through a phase offset and phase slope), processing them jointly rather than independently. This can effectively increase the bandwidth of the SRS resources and increase the accuracy of the measurement (e.g., a TOA measurement) taken by the TRP. This can ultimately increase the accuracy of the determined position of the UE 105 based on the measurement because the resolution of the position determination scales inversely with the increase in bandwidth.

The aggregation of SRS resources in different CCs (also referred to herein as "reference signal aggregation" and "SRS aggregation") can be done, for example, by jointly processing the resources by combining them in the signal domain. As used herein, this type of SRS aggregation is referred to as "coherent" processing, or "stitching" together of SRS resources/reference signals. Conversely, where SRS resources are not combined in this manner, it is referred to as "incoherent" processing. Again, coherent processing of SRS resources can take place where SRS resources are separated in frequency and/or time, related through a phase offset and phase slope. As described in more detail below, not only may SRS resources from different CCs be stitched together, but the CCs may be in different frequency bands and/or frequency ranges (FRs).

Because coherent processing of SRS resources from different CCs may be dependent on a phase relationship, or characteristic, between SRS resources, embodiments herein provide for the reporting of the UEs capabilities for maintaining a phase characteristic between SRS resources. That is, according to some embodiments, the UE 105 can report its capabilities to a network node regarding the UE's ability to maintaining a phase characteristic between SRS resources under one or more circumstances, enabling the network to configure the UE 105 accordingly. According to some embodiments, the UE 105 may report its capabilities with regard to an exhaustive set of conditions, and the network can determine the set of conditions that apply, or will apply, to a certain scenario in which SRS resources are transmitted. Alternatively, according to some embodiments, the UE may report its capabilities with regard to a default set of conditions, and at the network can interpret how these report capabilities apply to additional sets of conditions based on a governing standard or other agreed-upon protocol.

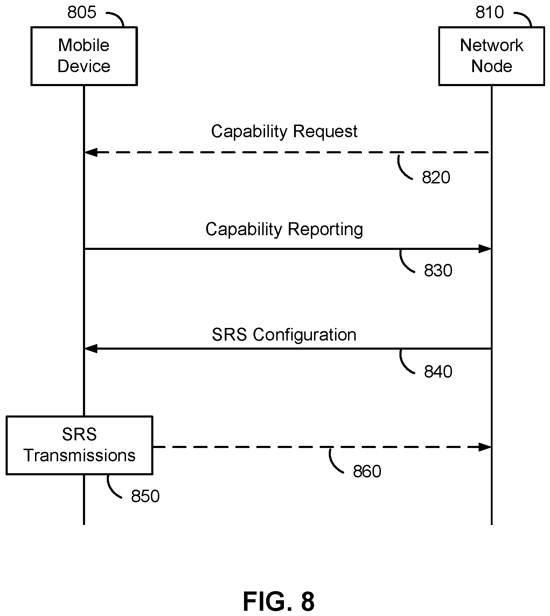

**FIG. 8** is a signal flow diagram illustrating how a mobile device 805 may communicate capabilities related to a phase characteristic between SRS resources to the network, according to an embodiment. FIG. 8 illustrates a communication exchange between the mobile device 805 and a network node 810. Here, the mobile device 805 may correspond to a UE 105 as previously described with regard to FIGS. 1-7. The network node 810 may comprise, for example, a TRP (e.g., serving gNB 210-1 of FIG. 2) or location server (e.g., LMF 220 of FIG. 2). As such, in some embodiments, there may be intervening components that serve to relay the communication (illustrated as arrows in FIG. 8) between the mobile device 805 and network node 810.

The communication exchange in FIG. 8 may take place using different protocols and/or within different communication sessions, depending on the type of network node 810. For example, for a network node 810 comprising an LMF 220, the communication exchange in FIG. 8 may take place using LPP protocol, during or before a positioning session between the mobile device 805 and LMF 220. Alternatively, if the network node 810 comprises a serving gNB 210-1, the communication exchange in FIG. 8 may occur during an RRC connection over RRC protocol.

The process may begin at arrow 820 and FIG. 8, where the network node 810 sends a capability request to the mobile device 805. The dashed line in FIG. 8 indicates optional functionality. In other words, some embodiments may not include the network node 810 explicitly providing a capability request to the mobile device 805.

The content of the capability request may vary, depending on desired functionality. According to some embodiments, for example, the capability request 820 may solicit the capabilities of the mobile device 805 with regard to maintaining a phase characteristic between SRS resources under all conditions. Alternatively, the capability request 820 may solicit capabilities under a limited number of conditions, based on different options (e.g., CCs, frequency bands, time slots, etc.) available for transmittal of the SRS resources.

At action 830, the mobile device provides capability reporting to the network node 810. As noted, this may be in response to a capability request 820 or may be provided to the network node 810 without a request. In short, the capability reporting 830 gives the network an indication of the mobile device's capabilities for maintaining a phase relationship between a first SRS and a second SRS. This can enable the network to determine whether to stitch the first and second SRS resources together. The phase relationship may be described as a phase characteristic, such as phase offset, phase ramp, phase slope, or phase time drift.

With regard to phase ramp, the phase ramp can be a phase ramp across time, across frequency, or both. A phase ramp across frequency corresponds, for example, to a case in which the first and second CCs corresponding to the first and second SRS resources have a time drift. A phase ramp across time corresponds, for example, to a case in which there is a Carrier Frequency Offset (CFO) or different doppler shifts between the CCs.

The mobile device's capabilities for maintaining a phase relationship between a first and second SRS may be conveyed in any of a variety of ways. Three such capabilities will be discussed in the examples that follow:
- **Capability #1: the mobile device's ability to maintain a phase characteristic between first and second SRS resources below a threshold value.** For example, for a phase offset between first and second SRS resources given by *θ* = *ε*, a mobile device 805 may have the capability to maintain phase offset is below a threshold *θ* = *ε*th, for a given set of conditions. The phase characteristics of phase ramp, phase slope, and phase drift may have similar thresholds.
- **Capability #2: the mobile device's ability to maintain a phase characteristic between first and second SRS resources at a constant value.** That is, although a value device of a phase offset, ramp, slope, etc. between first and second SRS resources may be unknown, the mobile device 805 may be capable of keeping the value device constant for a given set of conditions.
- **Capability #3: the mobile device's inability to maintain the phase characteristic.** In other words, although the mobile device 805 may not be capable of maintaining a phase relationship between first and second SRS resources under a given set of conditions. In such instances, the network can then configure the mobile device 805 without assuming stitching SRS resources is possible under those conditions. This functionality (no stitching) is essentially legacy behavior.

Given these capabilities the network node 810 can, at arrow 840, provide and SRS configuration to the mobile device 805. The SRS configuration may be made to accommodate the mobile devices capabilities in view of available network resources. Additionally or alternatively, the network node 810 can similarly configure TRPs to receive SRS transmissions from the mobile device 805 in view of the mobile device's capabilities (e.g., indicating to TRP is whether to coherently process SRS resources).

At block 850, the mobile device 805 then sends the SRS transmissions in accordance with the SRS configuration received at arrow 840. Because the network node 810 may comprise a TRP, the network node 810 may receive SRS transmissions from the mobile device 805, as indicated by arrow 860. As noted, the SRS transmissions 850 may be received by additional or alternative TRPs. In embodiments where the network node 810 comprises an LMF 220, measurements of the SRS transmissions 850 taken by one or more TRPs may be forwarded to the LMF 220 to determine the position of the mobile device 805.

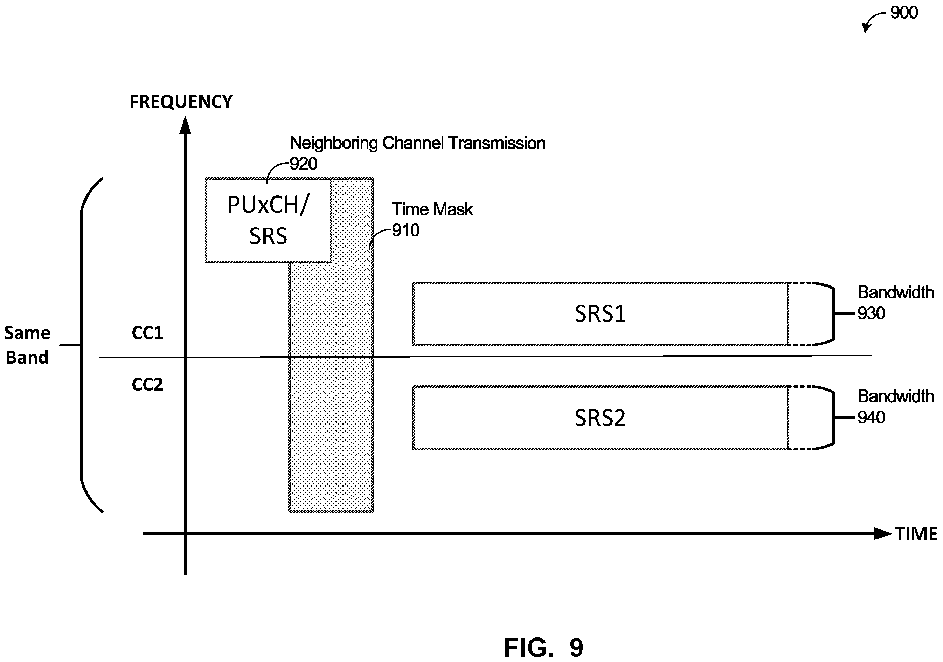

As noted, the capabilities of the mobile device 805 (e.g., capabilities #1 to #3 above) may vary, depending on various conditions. These conditions may include, for example, whether CCs are in the same or different band, whether there is full/partial/no temporal overlap between the SRS resources, whether SRS resources have the same or different bandwidth, and/or whether the comb type of the SRS resources is the same or different. Capabilities additionally may be impacted by a time mask (also known as a "transient period" or "guard period") between one or both SRS resources and a neighboring channel in one of the CCs. Examples of various conditions are provided in FIGS. 9-13.

**FIG. 9** is a diagram 900 illustrating an example of a first set of conditions, according to an embodiment. The diagram 900 plots SRS resources, SRS1 and SRS2, in frequency (e.g., a block of subcarriers) over time, illustrating the relationship in time and frequency one another. Similar to the PRS resources previously described, and SRS resource may occupy different symbols within a slot (e.g., according to a comb structure as illustrated in FIG. 5), may span one or more slots, and may be repeated (e.g., as illustrated in FIG. 7).

The set of conditions in FIG. 9 may represent a set of conditions most favorable to maintaining a phase characteristic between SRS1 and SRS2. Specifically, there is full temporal overlap between SRS1 and SRS2 (i.e., they start and end at the same time). Furthermore, there is no overlap between either SRS resource and a time and mask 910 resulting from a neighboring channel transmission 920. Additionally, the bandwidth 930 of SRS1 is the same as the bandwidth 940 of SRS2. Although not shown, the comb type between SRS 1 and SRS 2 may be the same as well.

As noted, according to some embodiments, the mobile device 805 may report capabilities with regard to a default set of conditions, such as the conditions illustrated in FIG. 9. In such cases, the network node 810 may be able to determine the mobile device's capability under other conditions. For example, capability #1 may represent the mobile device's capability under favorable conditions, capability #2 may represent the mobile device's capability under less favorable conditions, and capability #3 may represent the mobile device's capability under the least favorable conditions. If that is the case, and the mobile device 805 reports capability #3 under default (favorable) conditions such as those illustrated in FIG. 9, the network node 810 can then determine that the mobile device 805 has capability #3 under all other conditions. Alternatively, if the mobile device 805 reports capability #2 or capability #1 under default conditions, the network node 810 may use a set of rules (e.g., as set forth by a governing standard or protocol) to determine which capabilities the mobile device 805 has under a different set of conditions, based on the capability reported by the mobile device 805. According to other embodiments, the mobile device 805 may provide capabilities under different sets of conditions.

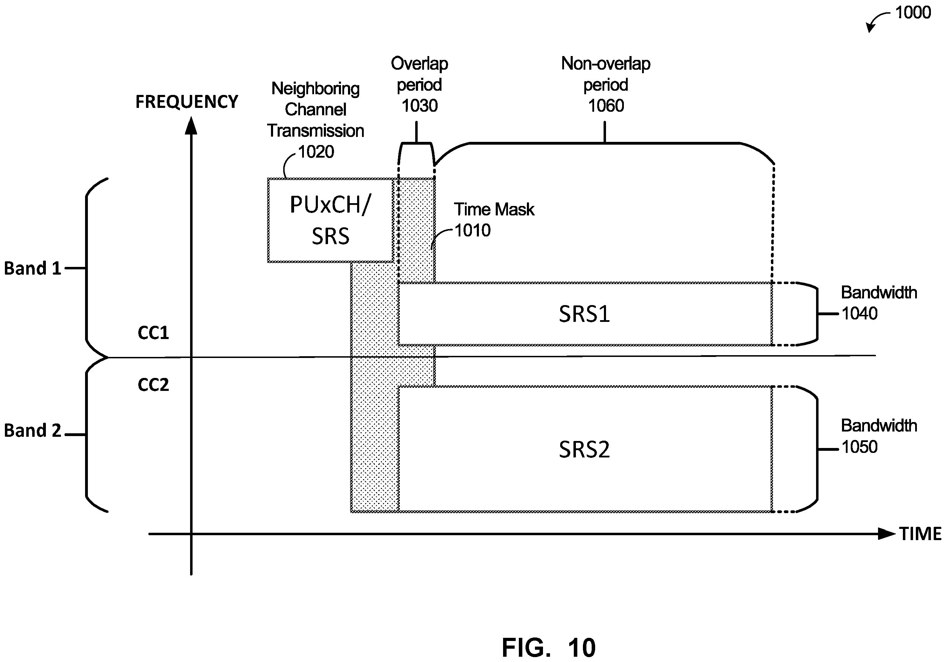

**FIG. 10** is a diagram 1000 illustrating another set of conditions, according to an embodiment. Here, CC1 and CC2 are located in different frequency bands: Band 1 and Band 2, respectively. Additionally, a time mask 1010 from a neighboring channel transmission 1020 overlaps with SRS1 and SRS2 for an overlap period 1030. Furthermore, the bandwidth 1040 of SRS1 is different than the bandwidth 1050 of SRS2. Each of these differences from the conditions in FIG. 9 may impact the capability of the mobile device 805 for maintaining a phase characteristic between SRS1 and SRS2. For example, a mobile device 805 having capability #1 under the conditions illustrated in FIG. 9 may have capabilities #2 and/or #3 for different sets of conditions within a FIG. 10.

A time mask 1010 is a designated period of time for allowing a mobile device to transition from transmitting something on a neighboring channel to transmitting the SRS. The length of time mask 1010 may be defined (e.g., by a governing standard or protocol) in terms of microseconds. Moreover, the length may vary, depending on the frequency band or frequency range. (E.g., time mask 1010 may be set as 5 µs in FR1 and 15 µs in FR2.) Further, as illustrated, the neighboring channel transmission 1020 may comprise a Physical Uplink Shared Channel (PUSCH), Physical Uplink Control Channel (PUCCH), or another SRS resource.

A time mask 1010 may apply to an SRS on the same CC (e.g., SRS1) as the neighboring channel transmission 1020, as well as other CCs in the same frequency band. This is because CCs of the same frequency band often use the same power amplifier (PA), and the neighboring channel transmission 1020 can result in a frequency-selective phase disruption on SRS within the same frequency band for the length of the time mask 1010. That said, as illustrated in FIG. 10, a time mask 1010 may also apply to an SRS in a different band (e.g., SRS2) in cases where the same PA is used for both frequency bands.

The impact of the overlap period 1030 may vary. For example, according to some embodiments, the mobile device 805 may have a first capability during the overlap period 1030 and a second capability during the non-overlap period 1060. These capabilities may be assumed by the network (based on default capabilities reported by the UE 805 and applicable set of rules for applying the default capabilities to a time mask overlap) or may be explicitly provided by the mobile device 805. Alternatively, the mobile device 805 may have a single capability for the entire duration of SRS1 and SRS2, which may be based in part on the overlap with the time mask 1010. For example, where the mobile device 805 may otherwise have capability #1 for the duration of SRS1 and SRS2, because of the overlap with time mask 1010, it may instead have capability #2 for the entire duration of SRS1 and SRS2.

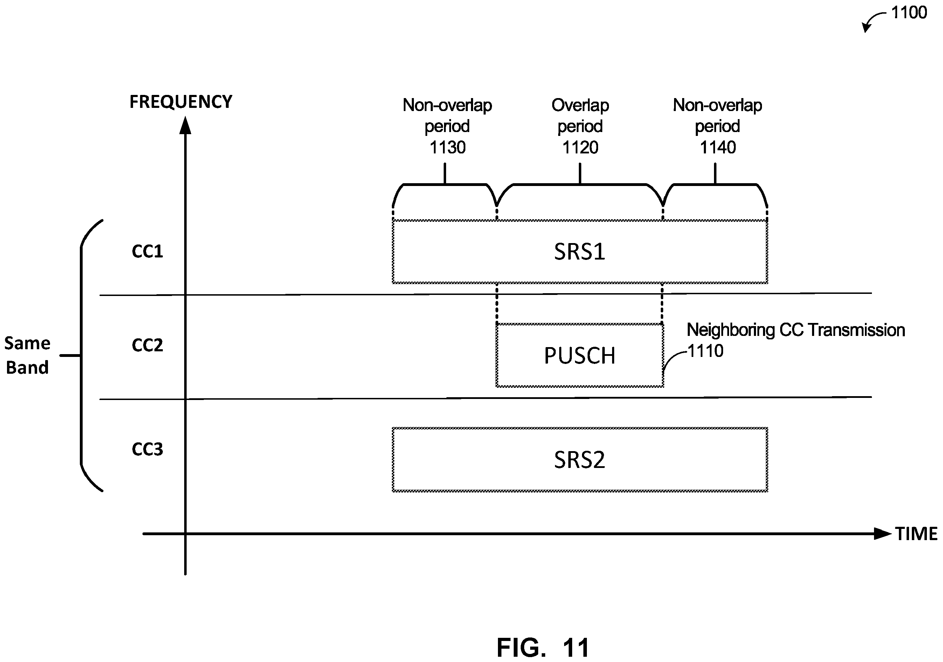

**FIG. 11** is a diagram 1100 illustrating yet another set of conditions, according to an embodiment. Here, the diagram 1100 shows three neighboring CCs in the same band. SRS1 and SRS2 are transmitted in CC1 and CC3, respectively, and a neighboring CC transmission 1110 (a PUSCH) occurs in CC2 during SRS1 and SRS2. This results in an overlap period 1120 sandwiched between a first non-overlap period 1130 and a second non-overlap period 1140. According to some embodiments, this may result in a different phase offset between SRS1 and SRS2 for each of these periods. However, if the phase offset remains below a threshold, capability #1 would still apply for the entire duration of SRS1 and SRS2. Alternatively, the neighboring CC transmission 1110 may result in different capabilities for different periods.

It can be noted that different capabilities may apply to a mobile device 805 with respect to different phase characteristics. For example, as noted above, a UE may be able to maintain a phase offset of less than a threshold for each of the periods 1120, 1130, and 1140. Thus the UE may have capability #1 with respect to phase offset for each of these periods 1120, 1130, and 1140. However, the conditions in FIG. 11 may affect phase offset or phase ramp differently. For example, the neighboring CC transmission 1110 may cause the UE to have capability #2 and/or #3 for one or more of the periods 1120, 1130, and 1140. With this in mind, according to some embodiments, the UE 805 may report (and/or the network node 810 may determine) different capabilities with respect to different phase characteristics.

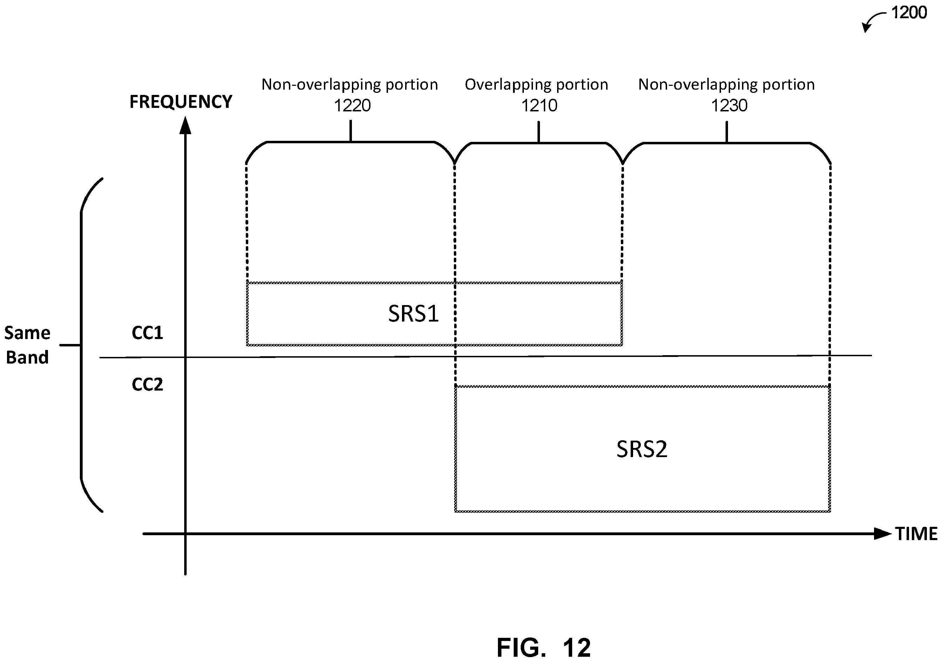

**FIG. 12** is a diagram 1200 illustrating yet another set of conditions, according to an embodiment. Here, SRS1 and SRS2 only partially overlap in time. The overlapping portion 1210 may span a set of symbols or one or more slots. Under other conditions (not illustrated) SRS1 and SRS2 may not overlap at all. In the example in FIG. 12, however, there is an overlapping portion 1210 and two nonoverlapping portions 1220 and 1230. Depending on the functionality of the UE 805, there may be differences between the capability of the UE 805 during the overlapping portion 1210 with one or both of the non-overlapping portions 1220 and 1230. Again, depending on desired functionality, these capabilities may be determined by the network via explicit reporting from the UE 805 or derivation from a governing specification in view of default capabilities. For example, the UE 805 may report a capability with respect to a default condition in which SRS1 and SRS2 fully overlap. The network node 810 may apply this capability to the overlapping portion 1210, and further extrapolate capabilities for the non-overlapping portions 1220 and 1230 based on the reported capability by the UE 805 and rules for determining non-overlapping portions as defined in a governing specification or protocol.

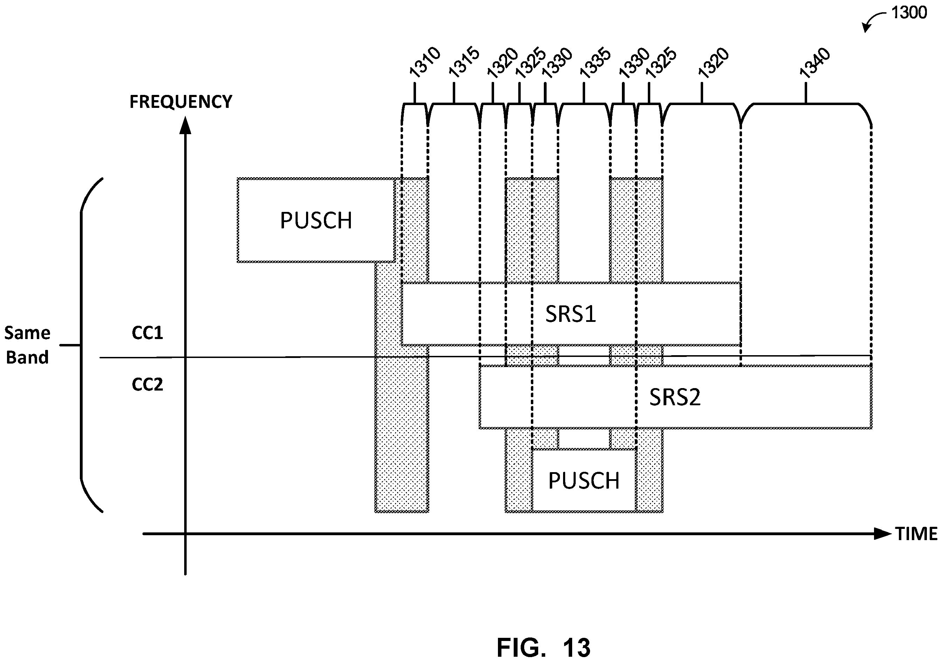

**FIG. 13** is a diagram 1300 illustrating yet another set of conditions, according to an embodiment. The diagram 1300 and FIG. 13 illustrates an extreme case with multiple sets of conditions for different periods of time. These periods include 1310 (a period in which SRS1 overlaps with a time mask), 1315 (a period in which only SRS1 is being transmitted), 1320 (periods in which SRS1 and SRS2 overlap), 1325 (periods in which both SRS1 and SRS2 overlap with a time mask), 1330 (periods in which both SRS1 and SRS2 overlap with a time mask and PUSCH), 1335 (a period in which both SRS1 and SRS2 overlap with a PUSCH), and 1340 (a period in which only SRS2 is being transmitted). The conditions in each of these periods may be considered to determine the capabilities of the mobile device 805 with respect to maintaining a phase characteristic between SRS1 and SRS2.

It can further be noted that, according to some embodiments, temporal considerations may also be taken into account. As previously noted, an overlap between an SRS with a time mask may impact the capability not only for the period of overlap between the SRS and time mask, but for the entire duration of the SRS. More generally, different capabilities may apply to a given set of conditions, based on one or more sets of conditions that precede the given set of conditions.

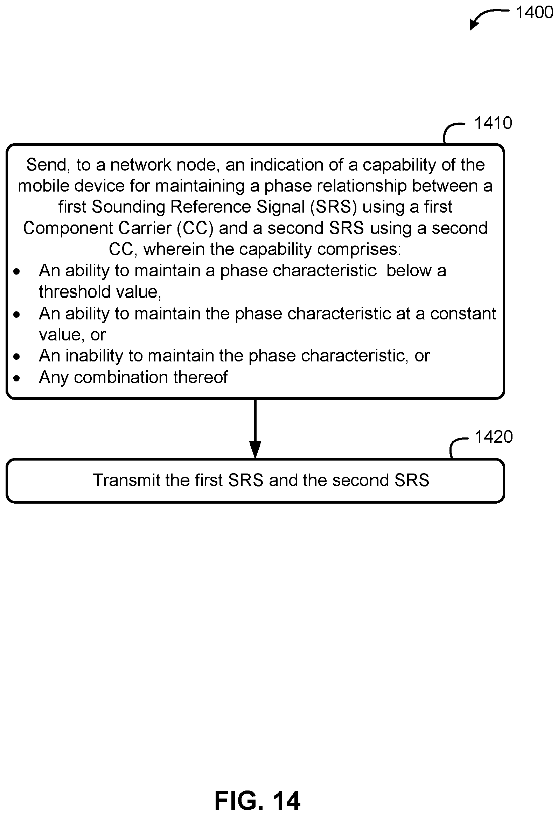

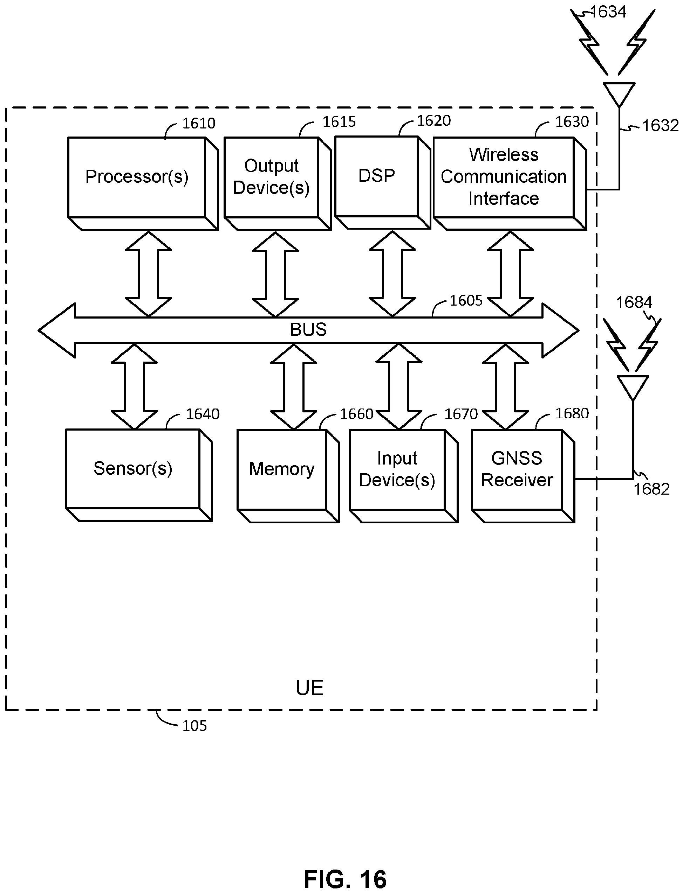

**FIG. 14** is a flow diagram of a method 1400 of wireless communication at a mobile device, according to an embodiment. The method 1400 provides for particular reporting of phase characteristic capabilities of the mobile device in the manner indicated in the previously-described embodiments. Means for performing the functionality illustrated in the blocks shown in FIG. 14 may be performed by hardware and/or software components of a UE. Example components of a UE are illustrated in FIG. 16, which are described in more detail below.

At block 1410, the functionality comprises sending to a network node, an indication of a capability of the mobile device for maintaining a phase relationship between a first SRS using a first CC and a second SRS using a second CC. The capability comprises an ability to maintain a phase characteristic below a threshold value, an ability to maintain the phase characteristic at a constant value, or an inability to maintain the phase characteristic, or any combination thereof. As discussed in the embodiments above, the phase characteristic may comprise a phase offset; a phase ramp across time, frequency, or both; a phase slope; or a phase time drift; or any combination thereof. Moreover, the capabilities of a UE for maintaining a phase characteristic between the first and second SRS a variety of conditions. As such, the capability of block 1410 may be dependent on a condition, where the condition comprises whether the first CC and the second CC are in a same or different frequency band, whether the first SRS and the second SRS fully or partially overlap in time, whether the first SRS and the second SRS have a same or different bandwidth, or whether the first SRS and the second SRS have a same or different comb type, or any combination thereof. According to some embodiments, the method 1400 may further comprise sending an indication of the condition to the network node.

According to some embodiments, additional conditions may apply. For example, the capability may be dependent on whether the first SRS overlaps with a time mask between a channel in the first CC and the first SRS. The channel may comprise a Physical Uplink Shared Channel (PUSCH), Physical Uplink Control Channel (PUCCH), or another SRS resource.

Means for performing functionality at block 1410 may comprise a wireless communication interface 1630, bus 1605, digital signal processor (DSP) 1620, processor(s) 1610, memory 1660, and/or other components of a UE 105, as illustrated in 16.

The functionality at block 1420 comprises transmitting the first SRS and the second SRS. As previously indicated, the network node may comprise a TRP (e.g., serving gNB) or location server (LMF). According to some embodiments, the indication of the capability is sent via Radio Resource Control (RRC) protocol. Means for performing functionality at block 1420 may comprise a wireless communication interface 1630, bus 1605, digital signal processor (DSP) 1620, processor(s) 1610, memory 1660, and/or other components of a UE 105, as illustrated in 16.

As previously described and illustrated in FIG. 8, sending the indication of the capability of the mobile device and transmitting the first SRS and second SRS may be part of a larger communication exchange with a network node and/or TRPs. For example, the indication of the capability may be sent in response to a capability request from the network node. Additionally or alternatively, the method 1400 may include, subsequent to sending the indication of the capability, receiving a configuration from the network node for transmitting the first SRS and the second SRS. Transmitting the first SRS and the second SRS may then comprise transmitting the first SRS and the second SRS in accordance with the configuration.

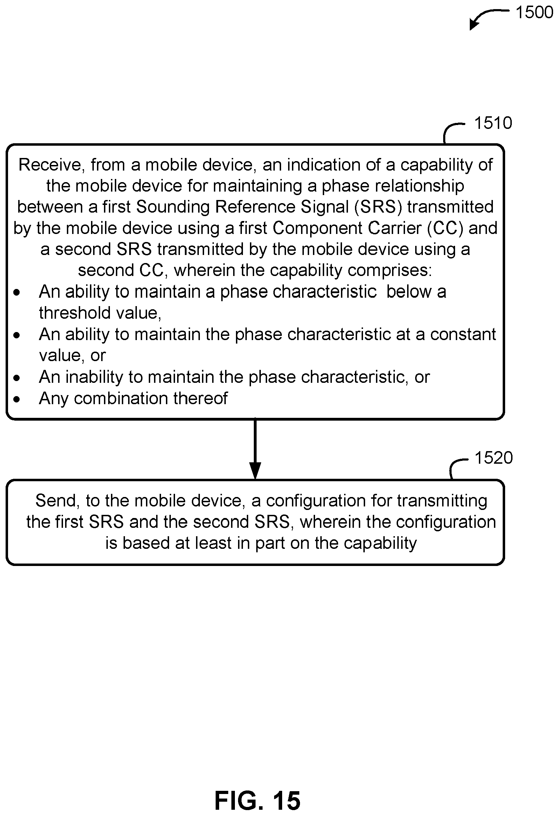

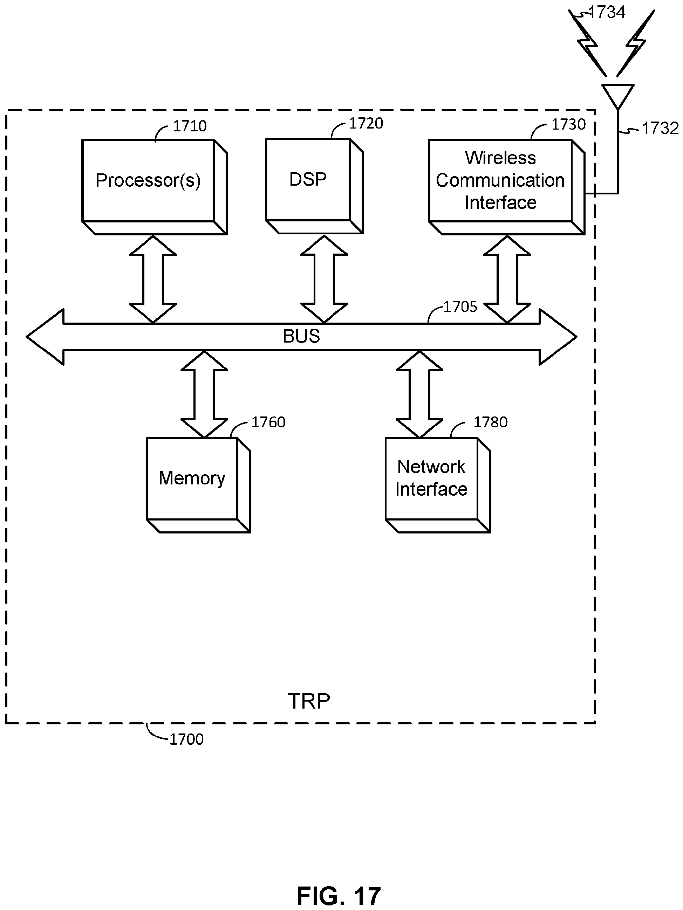

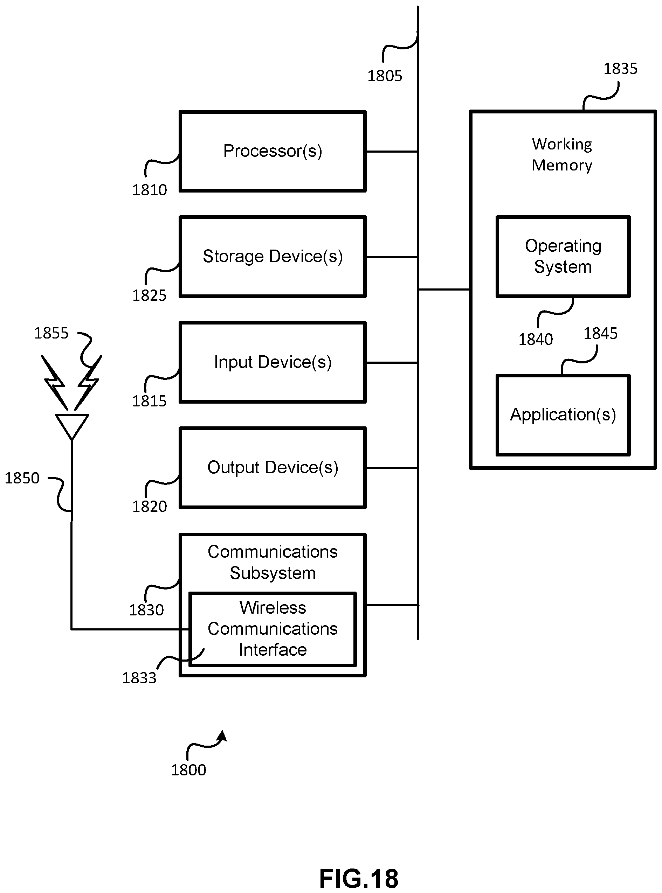

**FIG. 15** is a flow diagram of a method 1500 of wireless communication at a network node, according to an embodiment. The method 1500 provides for receiving capability reporting from the mobile device for maintaining a phase relationship in the manner indicated in the previously-described embodiments. Means for performing the functionality illustrated in the blocks shown in FIG. 15 may be performed by hardware and/or software components of a TRP (e.g., serving gNB) or location server (e.g., LMF). Example components of a TRP and server are illustrated in FIGS. 17 and 18, respectively, which are described in more detail below.

The functionality at block 1510 comprises, receiving, from a mobile device, an indication of a capability of the mobile device for maintaining a phase relationship between a first SRS transmitted by the mobile device using a first CC and a second SRS transmitted by the mobile device using a second CC. The capability comprises an ability to maintain a phase characteristic below a threshold value, an ability to maintain the phase characteristic at a constant value, or an inability to maintain the phase characteristic, or any combination thereof. Again, the phase characteristic may comprise a phase offset; a phase ramp across time, frequency, or both; a phase slope; or a phase time drift; or any combination thereof. The indication of the capability a be received via RRC protocol.

As noted in the above-described embodiments, a network node may further determine the capabilities of a mobile device based on additional considerations, in addition to the indication of the capability provided by the mobile device. As such, according to some embodiments, the method 1500 may further comprise determining a second capability, based on the received capability and a determination that the first SRS overlaps with a time mask between a channel in the first CC and the first SRS. The second capability may be determined for an entire duration of the first SRS. Alternatively, the second capability may be determined only for a duration of time during which the first SRS overlaps with the time mask. According to some embodiments, the method 1500 may further comprising determining a condition related to the transmitting of the first SRS and the second SRS. As noted, an indication of this condition may be explicitly provided to the network node by the mobile device, or otherwise obtained by the network node. The configuration may be further based on the condition. According to some embodiments, the condition can comprise whether the first CC and the second CC are in a same or different frequency band, whether the first SRS and the second SRS fully or partially overlap in time, whether the first SRS and the second SRS have a same or different bandwidth, or whether the first SRS and the second SRS have a same or different comb type, or any combination thereof.

Means for performing functionality at block 1510 may comprise a wireless communication interface 1730, bus 1705, digital signal processor (DSP) 1720, processor(s) 1710, memory 1760, and/or other components of a TRP 1700, as illustrated in FIG. 17; or a wireless communications interface 1833, bus 1805, processor(s) 1810, memory 1835, and/or other components of a computer system 1800, as illustrated in FIG. 18.

The functionality at block 1520 comprises, sending, to the mobile device, a configuration for transmitting the first SRS and the second SRS, wherein the configuration is based at least in part on the capability. Means for performing functionality at block 1520 may comprise a wireless communication interface 1730, bus 1705, digital signal processor (DSP) 1720, processor(s) 1710, memory 1760, and/or other components of a TRP 1700, as illustrated in FIG. 17; or a wireless communications interface 1833, bus 1805, processor(s) 1810, memory 1835, and/or other components of a computer 1800 system, as illustrated in FIG. 18.

**FIG. 16** illustrates an embodiment of a UE 105, which can be utilized as described herein above (e.g., in association with FIGS. 1-14). For example, the UE 105 can perform one or more of the functions of the method shown in FIG. 14. It should be noted that FIG. 16 is meant only to provide a generalized illustration of various components, any or all of which may be utilized as appropriate. It can be noted that, in some instances, components illustrated by FIG. 16 can be localized to a single physical device and/or distributed among various networked devices, which may be disposed at different physical locations. Furthermore, as previously noted, the functionality of the UE discussed in the previously described embodiments may be executed by one or more of the hardware and/or software components illustrated in FIG. 16.

The UE 105 is shown comprising hardware elements that can be electrically coupled via a bus 1605 (or may otherwise be in communication, as appropriate). The hardware elements may include a processor(s) 1610 which can include without limitation one or more general-purpose processors, one or more special-purpose processors (such as DSP chips, graphics acceleration processors, application specific integrated circuits (ASICs), and/or the like), and/or other processing structures or means. As shown in FIG. 16, some embodiments may have a separate DSP 1620, depending on desired functionality. Location determination and/or other determinations based on wireless communication may be provided in the processor(s) 1610 and/or wireless communication interface 1630 (discussed below). The UE 105 also can include one or more input devices 1670, which can include without limitation one or more keyboards, touch screens, touch pads, microphones, buttons, dials, switches, and/or the like; and one or more output devices 1615, which can include without limitation one or more displays (e.g., touch screens), light emitting diodes (LEDs), speakers, and/or the like.

The UE 105 may also include a wireless communication interface 1630, which may comprise without limitation a modem, a network card, an infrared communication device, a wireless communication device, and/or a chipset (such as a Bluetooth^{®} device, an IEEE 802.11 device, an IEEE 802.15.4 device, a Wi-Fi device, a WiMAX device, a WAN device, and/or various cellular devices, etc.), and/or the like, which may enable the UE 105 to communicate with other devices as described in the embodiments above. As such, the wireless communication interface 1630 can include RF circuitry capable of being tuned between an active BWP and one or additional bands having one or more FLs used for PRS signals, as described herein. The wireless communication interface 1630 may permit data and signaling to be communicated (e.g., transmitted and received) with TRPs of a network, for example, via eNBs, gNBs, ng-eNBs, access points, various base stations and/or other access node types, and/or other network components, computer systems, and/or any other electronic devices communicatively coupled with TRPs, as described herein. The communication can be carried out via one or more wireless communication antenna(s) 1632 that send and/or receive wireless signals 1634. According to some embodiments, the wireless communication antenna(s) 1632 may comprise a plurality of discrete antennas, antenna arrays, or any combination thereof.

Depending on desired functionality, the wireless communication interface 1630 may comprise a separate receiver and transmitter, or any combination of transceivers, transmitters, and/or receivers to communicate with base stations (e.g., ng-eNBs and gNBs) and other terrestrial transceivers, such as wireless devices and access points. The UE 105 may communicate with different data networks that may comprise various network types. For example, a Wireless Wide Area Network (WWAN) may be a CDMA network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, a WiMAX (IEEE 802.16) network, and so on. A CDMA network may implement one or more RATs such as CDMA2000, WCDMA, and so on. CDMA2000 includes IS-95, IS-2000 and/or IS-856 standards. A TDMA network may implement GSM, Digital Advanced Mobile Phone System (D-AMPS), or some other RAT. An OFDMA network may employ LTE, LTE Advanced, 5G NR, and so on. 5G NR, LTE, LTE Advanced, GSM, and WCDMA are described in documents from 3GPP. Cdma2000 is described in documents from a consortium named "3rd Generation Partnership Project 3" (3GPP2). 3GPP and 3GPP2 documents are publicly available. A WLAN may also be an IEEE 802.11x network, and a wireless personal area network (WPAN) may be a Bluetooth network, an IEEE 802.15x, or some other type of network. The techniques described herein may also be used for any combination of WWAN, WLAN and/or WPAN.

The UE 105 can further include sensor(s) 1640. Sensors 1640 may comprise, without limitation, one or more inertial sensors and/or other sensors (e.g., accelerometer(s), gyroscope(s), camera(s), magnetometer(s), altimeter(s), microphone(s), proximity sensor(s), light sensor(s), barometer(s), and the like), some of which may be used to obtain position-related measurements and/or other information.

Embodiments of the UE 105 may also include a Global Navigation Satellite System (GNSS) receiver 1680 capable of receiving signals 1684 from one or more GNSS satellites using an antenna 1682 (which could be the same as antenna 1632). Positioning based on GNSS signal measurement can be utilized to complement and/or incorporate the techniques described herein. The GNSS receiver 1680 can extract a position of the UE 105, using conventional techniques, from GNSS satellites 110 of a GNSS system, such as Global Positioning System (GPS), Galileo, GLONASS, Quasi-Zenith Satellite System (QZSS) over Japan, Indian Regional Navigational Satellite System (IRNSS) over India, BeiDou Navigation Satellite System (BDS) over China, and/or the like. Moreover, the GNSS receiver 1680 can be used with various augmentation systems (e.g., a Satellite Based Augmentation System (SBAS)) that may be associated with or otherwise enabled for use with one or more global and/or regional navigation satellite systems, such as, e.g., Wide Area Augmentation System (WAAS), European Geostationary Navigation Overlay Service (EGNOS), Multi-functional Satellite Augmentation System (MSAS), and Geo Augmented Navigation system (GAGAN), and/or the like.

It can be noted that, although GNSS receiver 1680 is illustrated in FIG. 16 as a distinct component, embodiments are not so limited. As used herein, the term "GNSS receiver" may comprise hardware and/or software components configured to obtain GNSS measurements (measurements from GNSS satellites). In some embodiments, therefore, the GNSS receiver may comprise a measurement engine executed (as software) by one or more processors, such as processor(s) 1610, DSP 1620, and/or a processor within the wireless communication interface 1630 (e.g., in a modem). A GNSS receiver may optionally also include a positioning engine, which can use GNSS measurements from the measurement engine to determine a position of the GNSS receiver using an Extended Kalman Filter (EKF), Weighted Least Squares (WLS), a hatch filter, particle filter, or the like. The positioning engine may also be executed by one or more processors, such as processor(s) 1610 or DSP 1620.

The UE 105 may further include and/or be in communication with a memory 1660. The memory 1660 can include, without limitation, local and/or network accessible storage, a disk drive, a drive array, an optical storage device, a solid-state storage device, such as a random access memory (RAM), and/or a read-only memory (ROM), which can be programmable, flash-updateable, and/or the like. Such storage devices may be configured to implement any appropriate data stores, including without limitation, various file systems, database structures, and/or the like.

The memory 1660 of the UE 105 also can comprise software elements (not shown in FIG. 16), including an operating system, device drivers, executable libraries, and/or other code, such as one or more application programs, which may comprise computer programs provided by various embodiments, and/or may be designed to implement methods, and/or configure systems, provided by other embodiments, as described herein. Merely by way of example, one or more procedures described with respect to the method(s) discussed above may be implemented as code and/or instructions in memory 1660 that are executable by the UE 105 (and/or processor(s) 1610 or DSP 1620 within UE 105). In an aspect, then such code and/or instructions can be used to configure and/or adapt a general-purpose computer (or other device) to perform one or more operations in accordance with the described methods.

**FIG. 17** illustrates an embodiment of a TRP 1700, which can be utilized as described herein above (e.g., in association with FIGS. 1-15), and may further perform the functions of one or more of the blocks shown in FIG. 15. It should be noted that FIG. 17 is meant only to provide a generalized illustration of various components, any or all of which may be utilized as appropriate.

The TRP 1700 is shown comprising hardware elements that can be electrically coupled via a bus 1705 (or may otherwise be in communication, as appropriate). The hardware elements may include a processor(s) 1710 which can include without limitation one or more general-purpose processors, one or more special-purpose processors (such as DSP chips, graphics acceleration processors, ASICs, and/or the like), and/or other processing structure or means. As shown in FIG. 17, some embodiments may have a separate DSP 1720, depending on desired functionality. Location determination and/or other determinations based on wireless communication may be provided in the processor(s) 1710 and/or wireless communication interface 1730 (discussed below), according to some embodiments. The TRP 1700 also can include one or more input devices, which can include without limitation a keyboard, display, mouse, microphone, button(s), dial(s), switch(es), and/or the like; and one or more output devices, which can include without limitation a display, light emitting diode (LED), speakers, and/or the like.

The TRP 1700 might also include a wireless communication interface 1730, which may comprise without limitation a modem, a network card, an infrared communication device, a wireless communication device, and/or a chipset (such as a Bluetooth^{®} device, an IEEE 802.11 device, an IEEE 802.15.4 device, a Wi-Fi device, a WiMAX device, cellular communication facilities, etc.), and/or the like, which may enable the TRP 1700 to communicate as described herein. The wireless communication interface 1730 may permit data and signaling to be communicated (e.g., transmitted and received) to UEs, other base stations/TRPs (e.g., eNBs, gNBs, and ng-eNBs), and/or other network components, computer systems, and/or any other electronic devices described herein. The communication can be carried out via one or more wireless communication antenna(s) 1732 that send and/or receive wireless signals 1734.

The TRP 1700 may also include a network interface 1780, which can include support of wireline communication technologies. The network interface 1780 may include a modem, network card, chipset, and/or the like. The network interface 1780 may include one or more input and/or output communication interfaces to permit data to be exchanged with a network, communication network servers, computer systems, and/or any other electronic devices described herein.

In many embodiments, the TRP 1700 may further comprise a memory 1760. The memory 1760 can include, without limitation, local and/or network accessible storage, a disk drive, a drive array, an optical storage device, a solid-state storage device, such as a RAM, and/or a ROM, which can be programmable, flash-updateable, and/or the like. Such storage devices may be configured to implement any appropriate data stores, including without limitation, various file systems, database structures, and/or the like.

The memory 1760 of the TRP 1700 also may comprise software elements (not shown in FIG. 17), including an operating system, device drivers, executable libraries, and/or other code, such as one or more application programs, which may comprise computer programs provided by various embodiments, and/or may be designed to implement methods, and/or configure systems, provided by other embodiments, as described herein. Merely by way of example, one or more procedures described with respect to the method(s) discussed above may be implemented as code and/or instructions in memory 1760 that are executable by the TRP 1700 (and/or processor(s) 1710 or DSP 1720 within TRP 1700). In an aspect, then such code and/or instructions can be used to configure and/or adapt a general-purpose computer (or other device) to perform one or more operations in accordance with the described methods.

**FIG. 18** is a block diagram of an embodiment of a computer system 1800, which may be used, in whole or in part, to provide the functions of one or more network components as described in the embodiments herein (e.g., location server 160 of FIG. 1, LMF 220 of FIG. 2, etc.). It should be noted that FIG. 18 is meant only to provide a generalized illustration of various components, any or all of which may be utilized as appropriate. FIG. 18, therefore, broadly illustrates how individual system elements may be implemented in a relatively separated or relatively more integrated manner. In addition, it can be noted that components illustrated by FIG. 18 can be localized to a single device and/or distributed among various networked devices, which may be disposed at different geographical locations.

The computer system 1800 is shown comprising hardware elements that can be electrically coupled via a bus 1805 (or may otherwise be in communication, as appropriate). The hardware elements may include processor(s) 1810, which may comprise without limitation one or more general-purpose processors, one or more special-purpose processors (such as digital signal processing chips, graphics acceleration processors, and/or the like), and/or other processing structure, which can be configured to perform one or more of the methods described herein. The computer system 1800 also may comprise one or more input devices 1815, which may comprise without limitation a mouse, a keyboard, a camera, a microphone, and/or the like; and one or more output devices 1820, which may comprise without limitation a display device, a printer, and/or the like.

The computer system 1800 may further include (and/or be in communication with) one or more non-transitory storage devices 1825, which can comprise, without limitation, local and/or network accessible storage, and/or may comprise, without limitation, a disk drive, a drive array, an optical storage device, a solid-state storage device, such as a RAM and/or ROM, which can be programmable, flash-updateable, and/or the like. Such storage devices may be configured to implement any appropriate data stores, including without limitation, various file systems, database structures, and/or the like. Such data stores may include database(s) and/or other data structures used store and administer messages and/or other information to be sent to one or more devices via hubs, as described herein.

The computer system 1800 may also include a communications subsystem 1830, which may comprise wireless communication technologies managed and controlled by a wireless communication interface 1833, as well as wired technologies (such as Ethernet, coaxial communications, universal serial bus (USB), and the like). The wireless communication interface 1833 may send and receive wireless signals 1855 (e.g., signals according to 5G NR or LTE) via wireless antenna(s) 1850. Thus the communications subsystem 1830 may comprise a modem, a network card (wireless or wired), an infrared communication device, a wireless communication device, and/or a chipset, and/or the like, which may enable the computer system 1800 to communicate on any or all of the communication networks described herein to any device on the respective network, including a User Equipment (UE), base stations and/or other TRPs, and/or any other electronic devices described herein. Hence, the communications subsystem 1830 may be used to receive and send data as described in the embodiments herein.

In many embodiments, the computer system 1800 will further comprise a working memory 1835, which may comprise a RAM or ROM device, as described above. Software elements, shown as being located within the working memory 1835, may comprise an operating system 1840, device drivers, executable libraries, and/or other code, such as one or more applications 1845, which may comprise computer programs provided by various embodiments, and/or may be designed to implement methods, and/or configure systems, provided by other embodiments, as described herein. Merely by way of example, one or more procedures described with respect to the method(s) discussed above might be implemented as code and/or instructions executable by a computer (and/or a processor within a computer); in an aspect, then, such code and/or instructions can be used to configure and/or adapt a general purpose computer (or other device) to perform one or more operations in accordance with the described methods.

A set of these instructions and/or code might be stored on a non-transitory computer-readable storage medium, such as the storage device(s) 1825 described above. In some cases, the storage medium might be incorporated within a computer system, such as computer system 1800. In other embodiments, the storage medium might be separate from a computer system (e.g., a removable medium, such as an optical disc), and/or provided in an installation package, such that the storage medium can be used to program, configure, and/or adapt a general purpose computer with the instructions/code stored thereon. These instructions might take the form of executable code, which is executable by the computer system 1800 and/or might take the form of source and/or installable code, which, upon compilation and/or installation on the computer system 1800 (e.g., using any of a variety of generally available compilers, installation programs, compression/decompression utilities, etc.), then takes the form of executable code.

It will be apparent to those skilled in the art that substantial variations may be made in accordance with specific requirements. For example, customized hardware might also be used and/or particular elements might be implemented in hardware, software (including portable software, such as applets, etc.), or both. Further, connection to other computing devices such as network input/output devices may be employed.

With reference to the appended figures, components that can include memory can include non-transitory machine-readable media. The term "machine-readable medium" and "computer-readable medium" as used herein, refer to any storage medium that participates in providing data that causes a machine to operate in a specific fashion. In embodiments provided hereinabove, various machine-readable media might be involved in providing instructions/code to processors and/or other device(s) for execution. Additionally or alternatively, the machine-readable media might be used to store and/or carry such instructions/code. In many implementations, a computer-readable medium is a physical and/or tangible storage medium. Such a medium may take many forms, including but not limited to, non-volatile media, volatile media, and transmission media. Common forms of computer-readable media include, for example, magnetic and/or optical media, any other physical medium with patterns of holes, a RAM, a programmable ROM (PROM), erasable PROM (EPROM), a FLASH-EPROM, any other memory chip or cartridge, a carrier wave as described hereinafter, or any other medium from which a computer can read instructions and/or code.

The methods, systems, and devices discussed herein are examples. Various embodiments may omit, substitute, or add various procedures or components as appropriate. For instance, features described with respect to certain embodiments may be combined in various other embodiments. Different aspects and elements of the embodiments may be combined in a similar manner. The various components of the figures provided herein can be embodied in hardware and/or software. Also, technology evolves and, thus many of the elements are examples

It has proven convenient at times, principally for reasons of common usage, to refer to such signals as bits, information, values, elements, symbols, characters, variables, terms, numbers, numerals, or the like. It should be understood, however, that all of these or similar terms are to be associated with appropriate physical quantities and are merely convenient labels. Unless specifically stated otherwise, as is apparent from the discussion above, it is appreciated that throughout this Specification discussion utilizing terms such as "processing," "computing," "calculating," "determining," "ascertaining," "identifying," "associating," "measuring," "performing," or the like refer to actions or processes of a specific apparatus, such as a special purpose computer or a similar special purpose electronic computing device. In the context of this Specification, therefore, a special purpose computer or a similar special purpose electronic computing device is capable of manipulating or transforming signals, typically represented as physical electronic, electrical, or magnetic quantities within memories, registers, or other information storage devices, transmission devices, or display devices of the special purpose computer or similar special purpose electronic computing device.

Terms, "and" and "or" as used herein, may include a variety of meanings that also is expected to depend, at least in part, upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of" if used to associate a list, such as A, B, or C, can be interpreted to mean any combination of A, B, and/or C, such as A, AB, AA, AAB, AABBCCC, etc.

Having described several embodiments, various modifications, alternative constructions, and equivalents may be used. For example, the above elements may merely be a component of a larger system, wherein other rules may take precedence over or otherwise modify the application of the various embodiments. Also, a number of steps may be undertaken before, during, or after the above elements are considered.

## Claims

1. A method (1400) of wireless communication at a mobile device, the method comprising :
sending (1410), to a network node, an indication of a capability of the mobile device for maintaining a phase relationship between a first Sounding Reference Signal, SRS, using a first Component Carrier, CC, and a second SRS using a second CC, wherein the capability comprises:
an ability to maintain a phase characteristic below a threshold value,
an ability to maintain the phase characteristic at a constant value, or
an inability to maintain the phase characteristic, or
any combination thereof; and
transmitting (1420) the first SRS and the second SRS.

2. The method of claim 1, wherein the phase characteristic comprises:
a phase offset;
a phase ramp across time, frequency, or both;
a phase slope; or
a phase time drift; or
any combination thereof.

3. The method of claim 1, wherein the capability is dependent on a condition, the condition comprising:
whether the first CC and the second CC are in a same or different frequency band,
whether the first SRS and the second SRS fully or partially overlap in time,
whether the first SRS and the second SRS have a same or different bandwidth, or
whether the first SRS and the second SRS have a same or different comb type, or
any combination thereof;
the method optionally further comprising sending an indication of the condition to the network node.

4. The method of claim 1, further comprising, subsequent to sending the indication of the capability, receiving a configuration from the network node for transmitting the first SRS and the second SRS, wherein transmitting the first SRS and the second SRS comprises transmitting the first SRS and the second SRS in accordance with the configuration.

5. The method of claim 1, wherein the network node comprises a serving Transmission/Reception Point, TRP, (120), or a location server (160); or
the method of claim 1, wherein the indication of the capability is sent via Radio Resource Control, RRC, protocol.

6. The method of claim 1, wherein the capability is dependent on whether the first SRS overlaps with a time mask between a channel in the first CC and the first SRS, wherein, optionally, the channel comprises a Physical Uplink Shared Channel, PUSCH, a Physical Uplink Control Channel, PUCCH, or another SRS resource; or
the method of claim 1, wherein the indication of the capability is sent in response to a capability request from the network node.

7. A method (1500) of wireless communication at a network node , the method comprising:
receiving (1510), from a mobile device, an indication of a capability of the mobile device for maintaining a phase relationship between a first Sounding Reference Signal, SRS, transmitted by the mobile device using a first Component Carrier, CC, and a second SRS transmitted by the mobile device using a second CC, wherein the capability comprises:
an ability to maintain a phase characteristic below a threshold value,
an ability to maintain the phase characteristic at a constant value, or
an inability to maintain the phase characteristic, or
any combination thereof; and
sending (1520), to the mobile device, a configuration for transmitting the first SRS and the second SRS, wherein the configuration is based at least in part on the capability.

8. The method of claim 7, wherein the phase characteristic comprises:
a phase offset;
a phase ramp across time, frequency, or both;
a phase slope; or
a phase time drift; or
any combination thereof.

9. The method of claim 7, further comprising receiving an indication of a condition from the mobile device, wherein the configuration is further based on the condition.

10. The method of claim 7, wherein the network node comprises a serving Transmission/Reception Point, TRP, or a location server; or
the method of claim 7, wherein the indication of the capability is received via Radio Resource Control, RRC, protocol.

11. The method of claim 7, further comprising determining a second capability, based on the indication of the capability and a determination that the first SRS overlaps with a time mask between a channel in the first CC and the first SRS.

12. The method of claim 11, wherein the second capability is determined for an entire duration of the first SRS; or
wherein the second capability is determined only for a duration of time during which the first SRS overlaps with the time mask.

13. A mobile device (105) for wireless communication, the mobile device comprising:
a transceiver;
a memory (1660); and
one or more processors (1610) communicatively coupled with the transceiver and the memory, wherein the one or more processors are configured to :
send (1410), to a network node, an indication of a capability of the mobile device for maintaining a phase relationship between a first Sounding Reference Signal, SRS, using a first Component Carrier, CC, and a second SRS using a second CC, wherein the capability comprises:
an ability to maintain a phase characteristic below a threshold value,
an ability to maintain the phase characteristic at a constant value, or
an inability to maintain the phase characteristic, or
any combination thereof; and
transmit (1420), via the transceiver, the first SRS and the second SRS.

14. A network node for wireless communication, the network node comprising:
a transceiver;
a memory (1760); and
one or more processors (1710) communicatively coupled with the transceiver and the memory, wherein the one or more processors are configured to :
receive (1510), from a mobile device via the transceiver, an indication of a capability of the mobile device for maintaining a phase relationship between a first Sounding Reference Signal, SRS, transmitted by the mobile device using a first Component Carrier (CC) and a second SRS transmitted by the mobile device using a second CC, wherein the capability comprises:
an ability to maintain a phase characteristic below a threshold value,
an ability to maintain the phase characteristic at a constant value, or
an inability to maintain the phase characteristic, or
any combination thereof; and
send (1520), to the mobile device via the transceiver, a configuration for transmitting the first SRS and the second SRS, wherein the configuration is based at least in part on the capability.

15. The mobile device of claim 13 further configured to perform the method of any of claims 2 to 6; or the network node of claim 14 further configured to perform the method of claim 8 to 12.

16. A non-transitory computer-readable medium storing instructions comprising code for causing a mobile device to perform the method of any of claims 1 to 6, or for causing a network node to perform the method of any of claims 7 to 12.

## Patentansprüche

1. Verfahren (1400) zur drahtlosen Kommunikation an einem Mobilgerät, wobei das Verfahren Folgendes beinhaltet:
Senden (1410), zu einem Netzwerkknoten, einer Angabe einer Fähigkeit des Mobilgeräts zum Aufrechterhalten einer Phasenbeziehung zwischen einem ersten SRS (Sounding Reference Signal) mittels eines ersten CC (Component Carrier) und eines zweiten SRS mittels eines zweiten CC, wobei die Fähigkeit Folgendes umfasst:
eine Fähigkeit zum Halten einer Phasencharakteristik unter einem Schwellenwert,
eine Fähigkeit zum Halten der Phasencharakteristik auf einem konstanten Wert, oder
eine Unfähigkeit zum Halten der Phasencharakteristik, oder
eine beliebige Kombination davon; und
Übertragen (1420) des ersten SRS und des zweiten SRS.

2. Verfahren nach Anspruch 1, wobei die Phasencharakteristik Folgendes umfasst:
einen Phasenversatz;
eine Phasenrampe über Zeit, Frequenz oder beides;
eine Phasensteigung; oder
eine Phasenzeitdrift; oder
eine beliebige Kombination davon.

3. Verfahren nach Anspruch 1, wobei die Fähigkeit von einem Zustand abhängt, wobei der Zustand Folgendes umfasst:
ob der erste CC und der zweite CC in einem gleichen oder unterschiedlichen Frequenzband sind,
ob das erste SRS und das zweite SRS sich zeitlich ganz oder teilweise überlappen,
ob das erste SRS und das zweite SRS dieselbe oder eine unterschiedliche Bandbreite haben, oder
ob das erste SRS und das zweite SRS dieselbe oder eine unterschiedliche Kammstruktur haben, oder
eine beliebige Kombination davon;
wobei das Verfahren ferner optional das Senden einer Angabe des Zustands zu dem Netzwerkknoten beinhaltet.

4. Verfahren nach Anspruch 1, das ferner nach dem Senden der Angabe der Fähigkeit das Empfangen einer Konfiguration von dem Netzwerkknoten zum Übertragen des ersten SRS und des zweiten SRS beinhaltet, wobei das Übertragen des ersten SRS und des zweiten SRS das Übertragen des ersten SRS und des zweiten SRS gemäß der Konfiguration umfasst.

5. Verfahren nach Anspruch 1, wobei der Netzwerkknoten einen bedienenden Sende-/Empfangspunkt TRP (120) oder einen Standort-Server (160) umfasst; oder
Verfahren nach Anspruch 1, wobei die Angabe der Fähigkeit über das RRC-(Radio Resource Control)-Protokoll gesendet wird.

6. Verfahren nach Anspruch 1, wobei die Fähigkeit davon abhängt, ob das erste SRS mit einer Zeitmaske zwischen einem Kanal in der ersten CC und dem ersten SRS überlappt, wobei der Kanal optional einen PUSCH (Physical Uplink Shared Channel), einen PUCCH (Physical Uplink Control Channel) oder eine andere SRS-Ressource umfasst; oder
Verfahren nach Anspruch 1, wobei die Angabe der Fähigkeit als Reaktion auf eine Fähigkeitsanfrage von dem Netzwerkknoten gesendet wird.

7. Verfahren (1500) zur drahtlosen Kommunikation an einem Netzwerkknoten, wobei das Verfahren Folgendes beinhaltet:
Empfangen (1510), von einem Mobilgerät, einer Angabe einer Fähigkeit des Mobilgeräts zum Aufrechterhalten einer Phasenbeziehung zwischen einem ersten SRS (Sounding Reference Signal), das von dem Mobilgerät mittels eines ersten CC (Component Carrier) übertragen wird, und einem zweiten SRS, das von dem Mobilgerät mittels eines zweiten CC übertragen wird, wobei die Fähigkeit Folgendes umfasst:
eine Fähigkeit zum Halten einer Phasencharakteristik unter einem Schwellenwert,
eine Fähigkeit zum Halten der Phasencharakteristik auf einem konstanten Wert, oder
eine Unfähigkeit zum Halten der Phasencharakteristik, oder
eine beliebige Kombination davon; und
Senden (1520), zu dem Mobilgerät, einer Konfiguration zum Übertragen des ersten SRS und des zweiten SRS, wobei die Konfiguration zumindest teilweise auf der Fähigkeit basiert.

8. Verfahren nach Anspruch 7, wobei die Phasencharakteristik Folgendes umfasst:
einen Phasenversatz;
eine Phasenrampe über Zeit, Frequenz oder beides;
eine Phasensteigung; oder
eine Phasenzeitdrift; oder
eine beliebige Kombination davon.

9. Verfahren nach Anspruch 7, das ferner das Empfangen einer Angabe eines Zustands von dem Mobilgerät beinhaltet, wobei die Konfiguration ferner auf dem Zustand basiert.

10. Verfahren nach Anspruch 7, wobei der Netzwerkknoten einen bedienenden Sende-/Empfangspunkt (TRP) oder einen Standort-Server umfasst; oder
Verfahren nach Anspruch 7, wobei die Angabe der Fähigkeit über das RRC-(Radio Resource Control)-Protokoll empfangen wird.

11. Verfahren nach Anspruch 7, das ferner das Bestimmen einer zweiten Fähigkeit auf der Basis der Angabe der Fähigkeit und einer Feststellung beinhaltet, dass das erste SRS mit einer Zeitmaske zwischen einem Kanal in der ersten CC und dem ersten SRS überlappt.

12. Verfahren nach Anspruch 11, wobei die zweite Fähigkeit für eine gesamte Dauer des ersten SRS bestimmt wird; oder
wobei die zweite Fähigkeit nur für eine Zeitdauer bestimmt wird, während der das erste SRS mit der Zeitmaske überlappt.

13. Mobilgerät (105) zur drahtlosen Kommunikation, wobei das Mobilgerät Folgendes umfasst:
einen Transceiver;
einen Speicher (1660); und
einen oder mehrere Prozessoren (1610), die kommunikativ mit dem Transceiver und dem Speicher gekoppelt sind, wobei die ein oder mehreren Prozessoren konfiguriert sind zum:
Senden (1410), zu einem Netzwerkknoten, einer Angabe einer Fähigkeit des Mobilgeräts zum Aufrechterhalten einer Phasenbeziehung zwischen einem ersten SRS (Sounding Reference Signal) mittels eines ersten CC (Component Carrier) und eines zweiten SRS mittels eines zweiten CC, wobei die Fähigkeit Folgendes umfasst:
eine Fähigkeit zum Halten einer Phasencharakteristik unter einem Schwellenwert,
eine Fähigkeit zum Halten der Phasencharakteristik auf einem konstanten Wert, oder
eine Unfähigkeit zum Halten der Phasencharakteristik, oder
eine beliebige Kombination davon; und
Übertragen (1420) des ersten SRS und des zweiten SRS über den Transceiver.

14. Netzwerkknoten für drahtlose Kommunikation, wobei der Netzwerkknoten Folgendes umfasst:
einen Transceiver;
einen Speicher (1760); und
einen oder mehrere Prozessoren (1710), die mit dem Transceiver und dem Speicher kommunikativ gekoppelt sind, wobei die ein oder mehreren Prozessoren konfiguriert sind zum:
Empfangen (1510), von einem Mobilgerät über den Transceiver, einer Angabe einer Fähigkeit des Mobilgeräts zum Aufrechterhalten einer Phasenbeziehung zwischen einem ersten SRS (Sounding Reference Signal), das von dem Mobilgerät mittels eines ersten CC (Component Carrier) übertragen wird, und einem zweiten SRS, das von dem Mobilgerät mittels eines zweiten CC übertragen wird, wobei die Fähigkeit Folgendes umfasst:
eine Fähigkeit zum Halten einer Phasencharakteristik unter einem Schwellenwert,
eine Fähigkeit zum Halten der Phasencharakteristik auf einem konstanten Wert, oder
eine Unfähigkeit zum Halten der Phasencharakteristik, oder
eine beliebige Kombination davon; und
Senden (1520), zu dem Mobilgerät über den Transceiver, einer Konfiguration zum Übertragen des ersten SRS und des zweiten SRS, wobei die Konfiguration zumindest teilweise auf der Fähigkeit basiert.

15. Mobilgerät nach Anspruch 13, das ferner zum Durchführen des Verfahrens nach einem der Ansprüche 2 bis 6 konfiguriert ist; oder Netzwerkknoten nach Anspruch 14, der ferner zum Durchführen des Verfahrens nach einem der Ansprüche 8 bis 12 konfiguriert ist.

16. Nichtflüchtiges computerlesbares Medium, das Befehle speichert, die Code umfassen, um ein Mobilgerät zum Durchführen des Verfahrens nach einem der Ansprüche 1 bis 6 zu veranlassen oder um einen Netzwerkknoten zum Durchführen des Verfahrens nach einem der Ansprüche 7 bis 12 zu veranlassen.

## Revendications

1. Procédé (1400) de communication sans fil au niveau d'un dispositif mobile, le procédé comprenant :
l'envoi (1410), à un noeud de réseau, d'une indication d'une capacité du dispositif mobile à maintenir une relation de phase entre un premier signal de référence de sondage, SRS, utilisant une première porteuse constituante, CC, et un second SRS utilisant une seconde CC, dans lequel la capacité comprend :
une capacité à maintenir une caractéristique de phase en dessous d'une valeur seuil,
une capacité à maintenir la caractéristique de phase à une valeur constante, ou
une incapacité à maintenir la caractéristique de phase, ou
toute combinaison de celles-ci : et
la transmission (1420) du premier SRS et du second SRS.

2. Procédé selon la revendication 1, dans lequel la caractéristique de phase comprend :
un décalage de phase ;
une rampe de phase dans le temps, la fréquence ou les deux ;
une pente de phase ; ou
une dérive temporelle de phase ; ou
toute combinaison de ceux-ci.

3. Procédé selon la revendication 1, dans lequel la capacité dépend d'une condition, la condition comprenant :
la première CC et la seconde CC se trouvent dans une bande de fréquences identique ou différente,
le premier SRS et le second SRS se chevauchent totalement ou partiellement dans le temps,
le premier SRS et le second SRS ont une bande passante identique ou différente, ou
le premier SRS et le second SRS ont un type de peigne identique ou différent, ou
toute combinaison de ceux-ci ;
le procédé comprenant en outre l'envoi d'une indication de l'état au noeud de réseau.

4. Procédé selon la revendication 1, comprenant en outre, après l'envoi de l'indication de la capacité, la réception d'une configuration du noeud de réseau pour la transmission du premier SRS et du second SRS, dans lequel la transmission du premier SRS et du second SRS comprend la transmission du premier SRS et du second SRS conformément à la configuration.

5. Procédé selon la revendication 1, dans lequel le noeud de réseau comprend un point d'émission/réception de service, TRP (120) ou un serveur de localisation (160) ; ou
procédé selon la revendication 1, dans lequel l'indication de la capacité est envoyée par l'intermédiaire d'un protocole de commande de ressources radio, RRC.

6. Procédé selon la revendication 1, dans lequel la capacité est dépendante du chevauchement ou non par le premier SRS d'un masque temporel entre un canal dans la première CC et le premier SRS, dans lequel, éventuellement, le canal comprend un canal physique partagé de liaison montante, PUSCH, un canal physique de commande de liaison montante, PUCCH ou une autre ressource SRS ; ou
procédé selon la revendication 1, dans lequel l'indication de la capacité est envoyée en réponse à une demande de capacité en provenance du noeud de réseau.

7. Procédé (1500) de communication sans fil au niveau d'un noeud de réseau, le procédé comprenant :
la réception (1510), à partir d'un dispositif mobile, d'une indication d'une capacité du dispositif mobile à maintenir une relation de phase entre un premier signal de référence de sondage, SRS, transmis par le dispositif mobile à l'aide d'une première porteuse constituante, CC, et un second SRS transmis par le dispositif mobile à l'aide d'une seconde CC, dans lequel la capacité comprend :
une capacité à maintenir une caractéristique de phase en dessous d'une valeur seuil ;
une capacité à maintenir la caractéristique de phase à une valeur constante, ou
une incapacité à maintenir la caractéristique de phase, ou
toute combinaison de celles-ci ; et
l'envoi (1520), au dispositif mobile, d'une configuration pour la transmission du premier SRS et du second SRS, dans lequel la configuration est basée au moins en partie sur la capacité.

8. Procédé selon la revendication 7, dans lequel la caractéristique de phase comprend :
un décalage de phase ;
une rampe de phase dans le temps, la fréquence ou les deux ;
une pente de phase ; ou
une dérive temporelle de phase ; ou
toute combinaison de ceux-ci.

9. Procédé selon la revendication 7, comprenant en outre la réception d'une indication d'une condition en provenance du dispositif mobile, dans lequel la configuration est basée en outre sur la condition.

10. Procédé selon la revendication 7, dans lequel le noeud de réseau comprend un point d'émission /réception de service, TRP ou un serveur de localisation ; ou
procédé selon la revendication 7, dans lequel l'indication de la capacité est reçue par l'intermédiaire d'un protocole de commande de ressources radio, RRC.

11. Procédé selon la revendication 7, comprenant en outre la détermination d'une seconde capacité, sur la base de l'indication de la capacité et la détermination que le premier SRS chevauche un masque temporel entre un canal dans la première CC et le premier SRS.

12. Procédé selon la revendication 11, dans lequel la seconde capacité est déterminée pendant toute une durée du premier SRS ; ou
dans lequel la seconde capacité n'est déterminée que pour une durée de temps de chevauchement par le premier SRS du masque temporel.

13. Dispositif mobile (105) de communication sans fil, le dispositif mobile comprenant :
un émetteur-récepteur ;
une mémoire (1660) ; et
un ou plusieurs processeurs (1610) couplés de manière communicative à l'émetteur-récepteur et à la mémoire, dans lequel les un ou plusieurs processeurs sont configurés pour :
envoyer (1410), à un noeud de réseau, une indication d'une capacité du dispositif mobile à maintenir une relation de phase entre un premier signal de référence de sondage, SRS, utilisant une première porteuse constituante, CC, et un second SRS utilisant une seconde CC, dans lequel la capacité comprend :
une capacité à maintenir une caractéristique de phase en dessous d'une valeur seuil,
une capacité à maintenir la caractéristique de phase à une valeur constante, ou
une incapacité à maintenir la caractéristique de phase, ou
toute combinaison de celles-ci ; et
transmettre (1420), par l'intermédiaire de l'émetteur-récepteur, le premier SRS et le second SRS.

14. Noeud de réseau de communication sans fil, le noeud de réseau comprenant :
un émetteur-récepteur ;
une mémoire (1760) ; et
un ou plusieurs processeurs (1710) couplés de manière communicative à l'émetteur-récepteur et la mémoire, dans lequel les un ou plusieurs processeurs sont configurés pour :
recevoir (1510), à partir d'un dispositif mobile par l'intermédiaire de l'émetteur-récepteur, une indication d'une capacité du dispositif mobile à maintenir une relation de phase entre un premier signal de référence de sondage, SRS, transmis par le dispositif mobile à l'aide d'une première porteuse constituante (CC) et un second SRS transmis par le dispositif mobile à l'aide d'une seconde CC, dans lequel la capacité comprend :
une capacité à maintenir une caractéristique de phase en dessous d'une valeur seuil,
une capacité à maintenir la caractéristique de phase à une valeur constante, ou
une incapacité à maintenir la caractéristique de phase, ou
toute combinaison de ceux-ci ; et
envoyer (1520), au dispositif mobile via l'émetteur-récepteur, une configuration pour la transmission du premier SRS et du second SRS, dans lequel la configuration est basée au moins en partie sur la capacité.

15. Dispositif mobile selon la revendication 13, configuré en outre pour réaliser le procédé selon l'une quelconque des revendications 2 à 6 ; ou noeud de réseau selon la revendication 14 configuré en outre pour réaliser le procédé selon les revendications 8 à 12.

16. Support non transitoire lisible par ordinateur stockant des instructions comprenant un code pour amener un dispositif mobile à réaliser le procédé selon l'une quelconque des revendications 1 à 6, ou pour amener un noeud de réseau à réaliser le procédé selon l'une quelconque des revendications 7 à 12.
